# EUROPÄISCHE PATENTSCHRIFT

(11) **EP 3 630 662 B1**
(45) Veröffentlichungstag und Bekanntmachung des Hinweises auf die Patenterteilung: **04.10.2023**
(21) Anmeldenummer: 18727299.2
(22) Anmeldetag: 28.05.2018
(51) Int. Cl.: B65H 29/24, B65H 29/32, B65H 31/10, B65H 39/115, B65H 43/04, B65H 31/34, B65H 43/06, B65H 31/38, B65H 29/58, B65H 29/62, G06K 13/12, G06K 13/14, B65G 57/04

(54) **VORRICHTUNG UND VERFAHREN ZUM ABSTAPELN VON KARTENFÖRMIGEN DATENTRÄGERN**
DEVICE AND METHOD FOR STACKING CARD-SHAPED DATA CARRIERS
DISPOSITIF ET PROCÉDÉ POUR L'EMPILAGE DE SUPPORTS DE DONNÉES EN FORME DE CARTES

(30) Priorität: 31.05.2017 DE 102017111909
(43) Veröffentlichungstag der Anmeldung: 08.04.2020
(73) Patentinhaber: Mühlbauer GmbH & Co. KG, 93426 Roding (DE)
(72) Erfinder: KRAPF, Benjamin, 92271 Freihung (DE); STREHLE, Markus, 93426 Roding (DE)
(74) Vertreter: Platzöder, Michael Christian
(86) Internationale Anmeldenummer: PCT/EP2018/063903
(87) Internationale Veröffentlichungsnummer: WO 2018/219852

(56) Entgegenhaltungen:
- DE-A1- 10 202 641
- JP-U- S4 943 971
- US-A1- 2013 062 263

## Beschreibung

Die vorliegende Erfindung betrifft eine Vorrichtung und ein Verfahren zum Abstapeln von kartenförmigen Datenträgern, insbesondere von Chipkarten bzw. Smartcards, in einem Kartenmagazin.

Bei der Herstellung von kartenförmigen Datenträgern, insbesondere von sogenannten Chipkarten bzw. Smartcards, ist es regelmäßig erforderlich, die einzelnen Datenträger zu personalisieren. Dies kann etwa mittels individueller Aufdrucke oder sonstiger Bearbeitungen oder durch Versehen des Datenträgers mit speziellen Merkmalen verfolgen (beispielsweise durch Aufbringen von Prägungen oder Hologrammen). Darüber hinaus können im Rahmen der Personalisierung insbesondere auch Personalisierungsdaten in Halbleiterchips abgespeichert werden, die in den Datenträgern eingebettet sind. Dies macht eine individuelle Bearbeitung und gegebenenfalls nachfolgende Inspektion bzw. Prüfung der Datenträger erforderlich, so dass diese dafür vereinzelt, und nicht etwa gestapelt, vorliegen müssen.

Andererseits ist es üblich, beim Personalisierungsprozess mehrere der Datenträger in definierter Anzahl und sauber geordnet zur abschließenden Verpackung für den Transport oder zwischendurch zur Weiterleitung an eine nächste Prozessstation zusammenzufassen. Insbesondere kommen dazu regelmäßig zum Zusammenfassen von Datenträgern ähnlicher Form oder Größe sogenannte Kartenmagazine zum Einsatz, bei denen es sich um Aufnahmebehälter handelt, in denen die Datenträger in definierter Anzahl übereinandergestapelt und sodann mittels des Kartenmagazins gemeinsam gehandhabt, insbesondere transportiert werden können.

Bei bisher bekannten Personalisierungsvorrichtungen werden die Datenträger stets vereinzelt durch die Vorrichtung transportiert und müssen anschließend manuell daraus entnommen, abgezählt und verpackt werden. Soll dabei die Verpackung bzw. der Weitertransport der Datenträger mittels eines Kartenmagazins erfolgen, ist zudem ein manuelles Stapeln der Datenträger in das Kartenmagazin erforderlich.

DE 102 02 641 A1 offenbart eine Vorrichtung bzw. ein Verfahren zum Abstapeln von kartenförmigen Datenträgern gemäß dem Oberbegriff des Anspruchs 1 bzw. 13 und beschreibt eine Förder- und Abnahmevorrichtung für Datenträgerkarten mit einem über mindestens zwei Umlenkrollen geführten endlosen Transportband mit mindestens einem im Wesentlichen waagerechten Transportbandbereich und einer durch einen separaten Antrieb bewegte Abnahmevorrichtung für mittels des Transportbandes geförderten Datenträgerkarten. Die Abnahmevorrichtung weist mindestens ein im Wesentlichen an der Längsseite des Transportbandes senkrecht zu dessen Förderebene verfahrbares Ablöseelement mit einer Ablösekante auf, welches beim Abnahmeprozess einer an der freien Unterseite des Transportbandes mit ihrer Flachseite anliegend gehaltenen Datenträgerkarte mit den über den Seitenrand des Transportbandes überstehenden Randbereichen der betreffenden Datenträgerkarte an deren dem Transportband zugewandten Flachseite in Kontakt kommt und die Datenträgerkarte vom Transportband löst. In einem Ausführungsbeispiel weist die Abnahmevorrichtung zwei an den beiden gegenüberliegenden Längsseiten des Transportbandes verfahrbar angeordnete Ablöseelemente auf und die Ablösekante ist in einem spitzen Winkel zur Förderebene des Transportbandes angeordnet.

US 2013/0062263 A1 beschreibt eine Abgabevorrichtung für fehlerhafte Werkstücke, in der ein defektes Werkstück von einem Beförderungsweg, der eine Vielzahl von in einem vorbestimmten Förderabstand beabstandeten Werkstücken transportiert, zu einem Abgabeweg ausgegeben wird. Der Beförderungsweg hat einen ersten Wegabschnitt und einen zweiten Wegabschnitt stromabwärts des ersten Wegabschnitts. Ein Sortiermechanismus zwischen dem ersten und dem zweiten Wegabschnitt sortiert Werkstücke entweder in den zweiten Wegabschnitt oder in den Abgabeweg.

JP S49 43971 U beschreibt eine Vorrichtung zum Regulieren der Position von Materialplatten mit zwei rechtwinkligen Seiten, die als Einzelplatte oder als Paket zugeführt oder fallen gelassen werden sollen.

Der vorliegenden Erfindung liegt die Aufgabe zugrunde, eine verbesserte Vorrichtung zum Abstapeln von kartenförmigen Datenträgern bereitzustellen. Insbesondere wird dabei angestrebt, eine Verbesserung dahingehend zu erreichen, dass ein Abstapeln von Datenträgern in einem Kartenmagazin mit erhöhter Prozessgeschwindigkeit erfolgen kann.

Eine Lösung dieser Aufgabe wird erreicht durch eine Vorrichtung bzw. ein Verfahren zum Abstapeln von kartenförmigen Datenträgern gemäß den unabhängigen Ansprüchen, insbesondere auch durch die Verwendung der Vorrichtung zur Ausführung des Verfahrens. Verschiedene Ausführungsformen und Weiterbildungen der Erfindung sind Gegenstand der Unteransprüche.

Ein erster Aspekt der Erfindung betrifft eine Vorrichtung zum Abstapeln von kartenförmigen Datenträgern. Die Vorrichtung weist (i) eine Fördereinrichtung zum Transport von vereinzelten kartenförmigen Datenträgern stromabwärts entlang einer Förderstrecke sowie (ii) eine Abstapeleinheit zum selektiven Übertragen und Abstapeln von entlang der Förderstrecke geförderten kartenförmigen Datenträgern auf. Dabei ist die Fördereinrichtung eingerichtet, die kartenförmigen Datenträger so zu fördern, dass diese dabei in hängender Transportweise an ihr fixiert sind. Die Abstapeleinheit ist eingerichtet, selektiv bestimmte der entlang der Fördereinrichtung geförderten kartenförmigen Datenträger von dieser zu lösen, um sie unmittelbar - d.h. insbesondere ohne Zwischenprozessierung, Zwischentransport oder Zwischenlagerung - in ein Kartenmagazin zu überführen und darin zu stapeln, wenn dieses an einer bezogen auf die Schwerkraftrichtung unterhalb der Förderstrecke gelegenen Abstapelposition in einem Abstapelbereich angeordnet ist.

Unter einem "kartenförmigen Datenträger" im Sinne der Erfindung ist ein zum Tragen von Daten bzw. Informationen konfiguriertes Objekt zu verstehen, dass ein kartenförmiges, also im Wesentlichen flächiges, Substrat aufweist, auf oder in dem Daten bzw. Informationen aufgebracht bzw. eingebracht sind. So können derartige kartenförmige Datenträger etwa in Form von Ausweisdokumenten, Debit- oder Kreditkarten, Führerscheinen u. ä. vorliegen. Insbesondere stellen Chipkarten bzw. Smartcards kartenförmige Datenträger dar. Eine Chipkarte, oft auch als Smartcard oder Integrated Circuit Card (ICC) bezeichnet, ist dabei eine spezielle Kunststoffkarte mit eingebautem integriertem Schaltkreis (Chip), der eine Hardware-Logik, Speicher oder auch einen Mikroprozessor enthält. Die Norm ISO/IEC 7810 ist eine internationale Norm, die mehrere verschieden Formate für Identitätsdokumente spezifiziert, wozu unter anderem das "ID 1" Format gehört, das z. B. für als Chipkarte ausgeführte Bankkarten, Kreditkarten, Debitkarten, Führerscheine und insbesondere den am 1. November 2010 in Deutschland eingeführten elektronischen Personalausweis Verwendung findet.

Die Begriffe "stromabwärts" und "stromaufwärts" sind im Sinne der Erfindung so zu verstehen, dass sie sich auf den Durchlaufpfad der Datenträger durch die erfindungsgemäße Vorrichtung beziehen. Demnach erreicht ein Datenträger dabei also einen bezüglich einer bestimmten Stelle entlang des Durchlaufpfads durch die Vorrichtung stromaufwärts gelegenen Punkt eher als einen von derselben Stelle aus stromabwärts gelegenen Punkt. Dabei kommt es auf absolute (auf die Erdoberfläche bezogene) Richtungen im Raum nicht an. Insbesondere ist es ohne weiteres möglich, dass der Durchlaufpfad abschnittsweise in verschiedener absoluter Richtung und sogar in zu der anderer Abschnitte entgegengesetzten absoluten Richtung verläuft. Außerdem werden die Begriffe "stromabwärts" und "stromaufwärts" nachfolgend auf gleiche Weise auch zur Beschreibung der Bewegung von Kartenmagazinen durch die erfindungsgemäße Vorrichtung verwendet.

Unter einer "hängenden Transportweise" eines Datenträgers ist im Sinne der Erfindung insbesondere eine Transportweise für die Datenträger zu verstehen, bei der der jeweilige Datenträger an seinem bezogen auf die Schwerkraftrichtung oberen Ende fixiert ist (wie dies beispielsweise auch typischerweise bei einem Pendel der Fall ist), und/oder die Fixierung bzw. Befestigung des Datenträgers oberhalb seines Schwerpunkts erfolgt. Eine freie Beweglichkeit des Datenträgers bei gleichzeitiger Fixierung (etwa wie bei einem Pendel, das um seinen Fixpunkt schwingen kann) ist dagegen nicht erforderlich. Insbesondere liegt ein kartenförmiger Datenträger in hängender Transportweise vor, wenn er an einer ersten seiner beiden Hauptflächen fixiert ist, etwa durch flächiges Ansaugen, so dass die andere gegenüberliegende Hauptfläche in Schwerkraftrichtung unterhalb der ersten Hauptfläche zu liegen kommt. Dabei ist eine bezüglich der Schwerkraftrichtung senkrechte, also eine "horizontale" Ausrichtung des Datenträgers möglich und bevorzugt, aber nicht zwingend erforderlich.

Unter einer "liegenden Transportweise" eines Datenträgers im Sinne der Erfindung ist dementsprechend insbesondere eine Transportweise für die Datenträger zu verstehen, bei der der jeweilige Datenträger an seinem bezogen auf die Schwerkraft unteren Ende dieser entgegenwirkend gestützt, optional auch fixiert ist (wie dies beispielsweise auch typischerweise bei einem auf einem Tisch gelagerten Objekt der Fall ist). Insbesondere liegt ein kartenförmiger Datenträger in liegender Transportweise vor, wenn er an einer zweiten seiner beiden Hauptflächen gestützt ist, etwa durch flächiges oder teilflächiges Aufliegen auf einem anderen Objekt, so dass die gegenüberliegende erste Hauptfläche in Schwerkraftrichtung oberhalb der zweiten Hauptfläche zu liegen kommt. Dabei ist eine bezüglich der Schwerkraftrichtung senkrechte, also horizontale, Ausrichtung des Datenträgers möglich und bevorzugt, aber nicht zwingend erforderlich.

Unter einem "selektiven Lösen und Überführen" eines bestimmten der durch die Fördereinrichtung geförderten kartenförmigen Datenträger ist im Sinne der Erfindung zu verstehen, dass die Abstapeleinheit - jedenfalls auch - so eingerichtet ist bzw. das Abstapeln so erfolgt, dass für den Datenträger einzeln entschieden wird, ob bzw. wo er von der Fördereinrichtung gelöst wird und entsprechend wohin er nach dem Lösen überführt wird. So können etwa gezielt bestimmte Datenträger von der Fördereinrichtung gelöst werden, um sie in den Abstapelbereich oder stattdessen in einen Aussortierbereich zu überführen, anstatt dies gleichermaßen unabhängig von bestimmten Datenträger für sämtliche der Datenträger zu tun. Das schließt jedoch nicht aus, dass bei einem Abstapelprozess im Einzelfall sämtliche der durch die Fördereinrichtung geförderten Datenträger, etwa bei Vorliegen von gleichen oder ähnlichen Eigenschaften, zum Lösen und Überführen in dasselbe Kartenmagazin bzw. denselben Aussortierbereich ausgewählt werden.

Unter einem "Abstapelbereich" ist im Sinne der Erfindung ein definierter begrenzter räumlicher Bereich zu verstehen, der zur erfindungsgemäßen Vorrichtung gehörig sein kann, oder sich in deren Nachbarschaft befindet, und der eine oder mehrere Abstapelpositionen aufweist, die geeignet sind, jeweils ein Kartenmagazin so aufzunehmen, dass in dieses von der Abstapeleinheit bestimmte von der Fördereinrichtung selektiv gelöste Datenträger überführt werden können. Der Abstapelbereich kann dazu insbesondere geeignete physische Merkmale, wie etwa Halterungen oder Positionierungsmittel für die Kartenmagazine aufweisen.

Mit Hilfe der genannten Vorrichtung zum Abstapeln von kartenförmigen Datenträgern wird es möglich, selektiv einzelne durch die Fördereinrichtung transportierte Datenträger und ohne weitere Zwischenschritte in ein Kartenmagazin zu überführen und darin zu stapeln. Dadurch kann die Prozesskette deutlich verkürzt werden. Insbesondere können die abzustapelnden Datenträger in beliebiger innerhalb des Fassungsvermögens des Kartenmagazins liegender Anzahl darin gesammelt werden und gegebenenfalls auch sofort einem weiteren Prozessschritt zugeführt werden. Ein manuelles Entnehmen der vereinzelten Datenträger aus der Vorrichtung und ein sich anschließendes Zählen können somit gänzlich entfallen, was insbesondere auch zu einer Erhöhung der Prozessgeschwindigkeit führt. So sind grundsätzlich auch sehr hohe Durchlaufzeiten, beispielsweise im Bereich von 36 000 Datenträger/h oder sogar höher erreichbar, wodurch sich entsprechende Produktivitätsgewinne erzielen lassen können.

Nachfolgend werden bevorzugte Ausführungsformen der erfindungsgemäßen Vorrichtung und deren Weiterbildungen beschrieben, die jeweils, soweit dies nicht ausdrücklich ausgeschlossen wird, beliebig miteinander sowie mit den im Weiteren beschriebenen anderen Aspekten der Erfindung kombiniert werden können.

Gemäß einer bevorzugten Ausführungsform weist der Abstapelbereich eine erste und zumindest eine weitere jeweils bezogen auf die Schwerkraftrichtung unterhalb der Förderstrecke gelegene Abstapelposition auf, wobei jede Abstapelposition jeweils konfiguriert ist, ein Kartenmagazin aufzunehmen. Die Abstapeleinheit ist eingerichtet, selektiv bestimmte der entlang der Fördereinrichtung geförderten kartenförmigen Datenträger von dieser zu lösen, um sie unmittelbar in ein an der ersten oder an einer der weiteren Abstapelpositionen angeordnetes Kartenmagazin zu überführen und darin zu stapeln. Auf diese Weise ist es möglich, im Rahmen derselben Prozessierung der Datenträger nicht nur ein einziges, sondern insbesondere sequenziell oder parallel eine Mehrzahl von Kartenmagazinen zu befüllen, wobei der Zuordnung der Datenträger zu den einzelnen Kartenmagazinen gleiche, oder aber auch verschiedene Auswahlkriterien zum selektiven Lösen und Überführen der Datenträger zugrunde gelegt sein können. "Parallel" kann hier insbesondere auch so verstanden werden, dass zwei Datenträger zwar nicht gleichzeitig in verschiedene Kartenmagazine überführt werden, dass aber nicht zunächst erst eines der Kartenmagazine vollständig befüllt sein muss, bevor nachfolgende Datenträger in ein anderes, an einer anderen Abstapelposition befindliches Kartenmagazin überführt werden können.

Insbesondere sieht eine darauf aufbauende weitere bevorzugte Ausführungsform vor, dass die Abstapeleinheit eingerichtet ist, selektiv bestimmte der entlang der Fördereinrichtung geförderten kartenförmigen Datenträger von dieser zu lösen, um sie gemäß einem vorbestimmten Verteilungsschema alternierend entweder in ein an der ersten Abstapelposition oder in zumindest ein weiteres jeweils an einer der weiteren Abstapelpositionen angeordnetes Kartenmagazin zu überführen und darin zu stapeln. "Alternierend" kann dabei insbesondere im Sinne von "abwechselnd" zu verstehen sein, insbesondere auch so, dass gemäß dem Verteilungsschema stets zunächst eine vorbestimmte erste Anzahl von Datenträgern in ein erstes der Kartenmagazine überführt wird, bevor eine zweite, insbesondere gleiche, vorbestimmte Anzahl von Datenträgern in weiteres der Kartenmagazine überführt wird.

Stattdessen kann gemäß einer weiteren bevorzugten Ausführungsform das Verteilungsschema - zumindest abschnittsweise - vorsehen, dass zunächst ein erstes der an den verschiedenen Abstapelpositionen befindlichen Kartenmagazine bis zu einem definierten Befüllungsgrad, insbesondere vollständig bis zu seinem Fassungsvermögen, befüllt wird, bevor alternierend dazu ein weiteres der Kartenmagazine an einer anderen der Abstapelpositionen befüllt wird. Auf diese Weise lässt sich insbesondere vorteilhaft ein unterbrechungsfreier Betrieb der Vorrichtung realisieren, da sie, wenn eines der Kartenmagazine vollständig befüllt ist, nahtlos zur Befüllung eines weiteren noch aufnahmefähigen Kartenmagazins übergehen kann. Während dieses weitere Kartenmagazin befüllt wird, kann das bereits zuvor befüllte Kartenmagazin aus der Vorrichtung entnommen und durch ein neues leeres bzw. noch aufnahmefähiges Kartenmagazin an derselben Abstapelposition ersetzt werden, um nachfolgend wiederum als Abstapelziel verwendet zu werden, wenn das gerade zum Abstapeln verwendete weitere Kartenmagazin ebenso vollständig befüllt ist, usw. Auf diese Weise lässt sich ein unterbrechungsfreier Betrieb ermöglichen.

Gemäß einer weiteren bevorzugten Ausführungsform weist die Vorrichtung zum Abstapeln von kartenförmigen Datenträgern des Weiteren eine Zuführeinrichtung zum Zuführen der Datenträger zur Fördereinrichtung sowie einen Übergabeabschnitt auf. Der Übergabeabschnitt ist eingerichtet, die von der Zuführvorrichtung transportierten Datenträger von dieser zu entnehmen und sie auf die Fördereinrichtung so zu übertragen, dass die Datenträger dabei in einem stromaufwärts von der Abstapeleinheit gelegenen Bereich der Förderstrecke von der Zuführeinrichtung in die hängende Transportweise an der Fördereinrichtung überführt werden. Dabei ist die Zuführeinrichtung bevorzugt eingerichtet, die Datenträger so zur Fördereinrichtung zu transportieren, dass die Datenträger dabei, zumindest im Übergabeabschnitt, in liegender Transportweise bewegt werden. Auf diese Weise wird es möglich, die Datenträger auch in der bei Transportvorrichtungen überwiegend verwendeten liegenden Transportweise der Vorrichtung zum Abstapeln zuzuführen, da diese nun selbst in der Lage ist, im Übergabeabschnitt die Datenträger in die zum Abstapeln verwendete hängende Transportweise zu überführen. Auch eine stehende bzw. vertikale Transportweise ist denkbar. Somit wird die Flexibilität bei der Einbindung der Vorrichtung zum Abstapeln in Produktions- oder Personalisierungslinien erweitert.

Gemäß einer weiteren bevorzugten Ausführungsform ist die Fördereinrichtung eingerichtet, die Datenträger so zu fördern, dass diese dabei mittels Ansaugen in hängender Transportweise an der Fördereinrichtung fixiert werden. Diese Art der Fixierung ist insbesondere für die hier infrage stehenden kartenförmigen Datenträger als zu transportierende Objekte eine bevorzugte Lösung, denn zum einen sind keine mechanischen Greif- oder Fixierungsmechanismen jenseits einer Ansaugvorrichtung erforderlich, um die Datenträger an der Fördereinrichtung zu halten und daran hängend zu transportieren. Zum anderen sind auch keine elektrischen, etwa magnetisch oder elektrostatisch wirkenden Vorrichtungen dazu erforderlich, die in nachteilhafte Wechselwirkung mit den Datenträgern selbst treten könnten, wie etwa mit deren elektrischen Komponenten, insbesondere Leiterbahnen, Antennen oder Halbleiterchips.

Gemäß der Erfindung ist die Abstapeleinheit eingerichtet, zum selektiven Lösen eines bestimmten entlang der Fördereinrichtung geförderten Datenträgers auf diesen einen mechanischen Impuls zu übertragen. Auf diese Weise kann nicht nur das selektive Lösen des Datenträgers von der Fördereinrichtung, sondern auch dessen gerichtete Bewegung im Rahmen des Abstapelns, also insbesondere dessen Überführung in ein zum Abstapeln vorgesehenes Kartenmagazin gezielt mittels des Impulsübertrags bzgl. Richtung und/oder Geschwindigkeit beeinflusst bzw. gesteuert werden.

Erfindungsgemäß ist die Fördereinrichtung eingerichtet, den Impuls mittels Abblasen des Datenträgers von der Fördereinrichtung - d.h. einer Erzeugung eines gegen den zunächst an der Fördereinrichtung hängenden Datenträger gerichteten Luftstroms, der eine den Datenträger von der Fördereinrichtung abstoßende Wirkung auf diesen ausübt - auf ihn zu übertragen. Dies kann insbesondere den Vorteil bieten, dass zum Ansaugen und Abblasen wiederum dieselbe Vorrichtung verwendet werden kann, und zum anderen, dass sich Richtung und Geschwindigkeit des zum Abblasen verwendeten Luftstroms leicht beeinflussen und steuern lassen können, etwa durch entsprechende Ausrichtung oder Einstellung der Geometrie, insbesondere Öffnungsgröße, von optional an der Förderrichtung vorgesehenen Drucklufteinrichtungen, wie etwa Luftdüsen, zum Abblasen, und/oder Ansaugen der Datenträger.

Gemäß einer weiteren bevorzugten Ausführungsform weist die Vorrichtung zum Abstapeln von kartenförmigen Datenträgern des Weiteren zumindest ein Entladungselement auf, insbesondere eine oder mehrere antistatische Bürsten. Das Entladungselement ist konfiguriert, die Datenträger vor oder unmittelbar nach ihrem Lösen von der Fördereinrichtung jedenfalls teilweise elektrisch zu entladen. Auf diese Weise können elektrische, insbesondere elektrostatische Effekte, die zu einer Beeinträchtigung des Abstapelprozesses, etwa in Form von unerwünschten während der Überführung der Datenträger von der Fördereinrichtung in das Kartenmagazin wirkenden Kräften, oder bei der Anordnung der Datenträger, insbesondere auch bei deren relativen Anordnung zu anderen Datenträgern innerhalb des Kartenmagazins, minimiert oder sogar vollständig vermieden werden. Ein solches Entladungselement kann an der Fördereinrichtung und/oder an der Zuführvorrichtung - soweit vorhanden - angeordnet sein um die jeweils dadurch geförderten Datenträger zu entladen. Insbesondere durch die Kombination von Entladungselementen sowohl an der Zuführeinrichtung als auch an der Fördereinrichtung können beide Hauptseiten der Datenträger besonders effektiv elektrisch entladen werden.

Gemäß einer weiteren bevorzugten Ausführungsform weist die Vorrichtung zum Abstapeln von kartenförmigen Datenträgern des Weiteren eine Zentriereinrichtung auf, die eingerichtet ist, die von der Abstapeleinheit selektiv von der Fördereinrichtung gelösten Datenträger während ihrer Überführung zu einem an einer zugeordneten Abstapelposition des Abstapelbereichs befindlichen Kartenmagazin bezüglich einer Aufnahmeöffnung des Kartenmagazins auszurichten. Auf diese Weise kann zum einen die Wahrscheinlichkeit verringert oder gar auf im Wesentlichen Null reduziert werden, dass während der Überführung der von der Fördereinrichtung abgelösten Datenträger in das Kartenmagazin dadurch Fehlerquellen auftreten, dass die Trajektorie des jeweiligen Datenträgers und/oder seine Orientierung ohne vorherige Korrektur nicht zu einem problemlosen Eintritt in das Kartenmagazin führen würden. Zum anderen lässt sich dadurch auch bereits eine weitgehend konsistente Ausrichtung der in das Kartenmagazin überführten Datenträger relativ zueinander und/oder zum Kartenmagazin fördern bzw. erreichen.

Gemäß einer weiteren bevorzugten Ausführungsform weist die Vorrichtung zum Abstapeln von kartenförmigen Datenträgern des Weiteren eine Kartenmagazinzuführeinrichtung zum automatischen Zuführen von Kartenmagazinen zu einer Abstapelposition des Abstapelbereichs auf. Die Kartenmagazinzuführeinrichtung weist einen Transferbereich zum automatischen Transfer eines zugeführten Kartenmagazins in eine zugeordnete Abstapelposition des Abstapelbereichs auf, wobei der Transferbereich zumindest eines, bevorzugt sämtliche, der folgenden Elemente aufweist: (i) eine (erste) Sensoranordnung, die konfiguriert ist, die Anwesenheit und/oder Abwesenheit eines Kartenmagazins an zumindest einer Stelle der Kartenmagazinzuführeinrichtung zu detektieren; (ii) ein (erstes) Stoppelement zum Blockieren einer Zuführung eines oder mehrerer weiterer Kartenmagazine, wenn der Transferbereich noch von einem vorausgegangenen Kartenmagazin belegt ist; (iii) ein (erstes) Mitnehmerelement, das konfiguriert ist, ein in den Transferbereich überführtes Kartenmagazin vor dessen Weiterleitung zu der Abstapelposition temporär anzuhalten und erst zur Weiterleitung freizugeben, wenn eine automatisierte Prüfung ergibt, dass ein oder mehrere vorbestimmte Prüfkriterien zur Überprüfung, ob die Abstapelposition zur Aufnahme eines Kartenmagazins bereit ist, erfüllt sind; (iv) ein (erstes) Transferelement, das konfiguriert ist, ein im Transferbereich befindliches Kartenmagazin unter Krafteinwirkung auf dieses weiter an die Abstapelposition im Abstapelbereich zu transportieren.

Die (erste) Sensoreinrichtung kann einen oder vorzugsweise mehrere, insbesondere an verschiedenen Stellen der Kartenmagazinzuführeinrichtung angeordnete Sensoren aufweisen. Sie kann bevorzugt insbesondere im Transferbereich und/oder ggf. an einer am oder stromaufwärts von dem Stoppelement gelegenen Stelle und/oder an dem ersten Abstapelbereich die Anwesenheit bzw. Abwesenheit eines Kartenmagazins sensorisch detektieren. Auf diese Weise kann die Position eines oder mehrerer Kartenmagazine an der Kartenmagazinzuführeinrichtung sensorisch erfasst und zur optimierten Ablaufsteuerung der Kartenmagazinzuführeinrichtung, insbesondere im Hinblick auf das automatische Überführen eines Kartenmagazins von dieser aus an eine Abstapelposition im Abstapelbereich, verwendet werden.

Das (erste) Stoppelement stellt die Möglichkeit bereit, eine Kollision eines ersten bereits im Transferbereich positionierten Kartenmagazins mit einem oder mehreren an der Kartenmagazinzuführeinrichtung nachrückenden Kartenmagazinen zu verhindern. Das hat insbesondere den Vorteil, dass dadurch die Position und/oder Orientierung dieses ersten Kartenmagazins nicht - insbesondere nicht auf unvorhersehbare Weise - beeinträchtigt wird und somit der Transferprozess nicht gestört wird, was andernfalls zu Fehlern oder reduzierten Prozesszeiten, -effizienz und/oder -qualitäten führen könnte.

Das (erste) Mitnehmerelement stellt insbesondere die Möglichkeit bereit, die Weiterleitung eines bereits im Transferbereich befindlichen Kartenmagazins von einer Prüfung dahingehend abhängig zu machen, ob der nächste stromabwärts angeordnete Bereich der Vorrichtung, d.h. der Abstapelbereich bzw. eine zur Aufnahme des Kartenmagazins vorgesehene Abstapelposition darin, bereits zur Aufnahme des Kartenmagazins bereit ist oder zuvor in eine entsprechende Bereitschaft versetzt werden oder gewartet, instandgesetzt, neujustiert oder ähnliches werden muss. Die Prüfkriterien dienen dazu, eine entsprechende Prüfung zu definieren.

Das (erste) Transferelement eröffnet schließlich die Möglichkeit, den Transfer eines im Transferbereich befindlichen Kartenmagazins kontrolliert gemäß einem definierten Prozess - und nicht etwa nur unter Schwerkrafteinwirkung - an die Abstapelposition im Abstapelbereich zu transportieren. So können insbesondere die Prozessgeschwindigkeit und -zuverlässigkeit, also auch Prozesseffizienz und -verfügbarkeit sowie die erreichbare Prozessqualität erhöht bzw. sichergestellt werden.

Gemäß einer darauf aufbauenden, weiteren bevorzugten Ausführungsform beruhen das bzw. die vorbestimmten Prüfkriterien auf einem oder mehreren, bevorzugt sämtlichen, der folgenden Kriterien oder einer Kombination daraus, das bzw. die erfüllt sein müssen, damit bei der Prüfung festgestellt wird, dass die Abstapelposition zur Aufnahme eines Kartenmagazins bereit ist: (i) Es befindet sich kein Kartenmagazin an der Abstapelposition; (ii) falls ein (erstes) Stoppelement vorgesehen ist, ist dieses aktiviert, so dass eine Zuführung eines oder mehrerer weiterer Kartenmagazine in den Transferbereich blockiert ist; (iii) falls ein Transferelement vorgesehen ist, befindet sich dieses in einer Stellung, von der aus es das sich im Transferbereich befindliche Kartenmagazin zu der Abstapelposition transportieren kann; (iv) falls ein Mitnehmerelement vorgesehen ist, ist der Transportweg des Kartenmagazins vom Transferbereich zu der Abstapelposition nur noch durch das Mitnehmerelement und gegebenenfalls ein oder mehreren in Abhängigkeit davon bewegliche weiteren Elementen blockiert, so dass der Transportweg nach einer nachfolgenden Bewegung des Mitnehmerelements in eine nicht mehr blockierende Stellung frei wird. Diesen Kriterien ist, wie schon angesprochen gemein, dass sie als Indikatoren dafür herangezogen werden können, ob der nächste stromabwärts angeordnete Bereich der Vorrichtung, d.h. der Abstapelbereich bzw. eine zur Aufnahme des Kartenmagazins vorgesehene Abstapelposition darin, bereits zur Aufnahme des Kartenmagazins bereit ist oder nicht.

Gemäß einer weiteren bevorzugten Ausführungsform weist die Vorrichtung zum Abstapeln von kartenförmigen Datenträgern des Weiteren eine Hubeinrichtung auf, die eingerichtet und angeordnet ist: (i) ein Kartenmagazin zur Aufnahme von Datenträgern, die mittels der Abstapeleinheit zur Überführung in das Kartenmagazin gelöst werden, an einer der Hubeinrichtung zugeordneten Abstapelposition des Abstapelbereichs zu positionieren und zu stützen; und (ii) das Kartenmagazin selbst oder ein bewegliches Stapelträgerelement des Kartenmagazins in Abhängigkeit vom Befüllungsgrad des Kartenmagazins entlang einer Verfahrrichtung so zu verfahren, insbesondere gemäß einer entsprechenden Steuerung oder Regelung, dass das Lageniveau, bei dem ein jeweils neu dazukommender der Datenträger bei dessen Abstapeln in dem Kartenmagazin zu liegen kommt, für aufeinanderfolgende Datenträger zumindest im Wesentlichen, konstant gehalten wird. Auf diese Weise wird es insbesondere möglich, die Wegstrecke, die ein Datenträger bei seiner Überführung von der Fördereinrichtung in das Kartenmagazin zurücklegen muss, für mehrere, insbesondere sämtliche nacheinander in das Kartenmagazin abzustapelnde Datenträger - zumindest im Wesentlichen, insbesondere bis auf Abweichungen die kleiner sind als die durchschnittliche Dicke bzw. Stärke der Datenträger - gleich zu halten, und dabei insbesondere zu minimieren. So kann etwa das Kartenmagazin, bzw. dessen bewegliches Stapelträgerelement, zu Beginn des Abstapelprozesses, wenn das Kartenmagazin noch leer ist, in eine Stellung gebracht werden, bei der die genannte Überführungsstrecke der minimalen einstellbaren Überführungsstrecke entspricht. Sobald dann ein erster der Datenträger in das Kartenmagazin überführt wurde, kann dieses bzw. sein Stapelträgerelement so verfahren werden, dass die Überführungsstrecke für den unmittelbar nachfolgenden Datenträger wieder zumindest annähernd der Überführungsstrecke des vorausgegangenen ersten Datenträgers entspricht. Es ist also insgesamt insbesondere eine entsprechende stufenförmige Bewegung des Kartenmagazins bzw. seines Stapelträgerelements vorteilhaft.

Gemäß einer darauf aufbauenden, weiteren bevorzugten Ausführungsform weist die Hubeinrichtung zum Verfahren des Kartenmagazins bzw. seines beweglichen Stapelträgerelements einen Antrieb mit einem teleskopisch ausfahrbaren Kraftübertragungselement, insbesondere einen Druckzylinder, auf. Dies hat den Vorteil, dass der Antrieb eine kleinere Geometrie, insbesondere eine kleinere Maximalabmessung aufweisen kann, als die maximale Verfahrstrecke des Kartenmagazins bzw. seines beweglichen Stapelträgerelements. Da typische Längen solcher Kartenmagazine und folglich entsprechende Verfahrstrecken im Bereich von mehreren Dezimetern oder gar darüber liegen können, lassen sich auf diese Weise die Abmessungen der Vorrichtung zum Abstapeln von Datenträgern trotzdem gering halten. Insbesondere kann die Abstapelposition auf der Hubeinrichtung in niedriger Höhe oberhalb einer Grundfläche, auf der die Vorrichtung steht, vorgesehen werden, was Bedienungsvorteile insbesondere bei der Überwachung, Instandsetzung oder Wartung der Vorrichtung durch Bedienen- oder Wartungspersonal mit sich bringen kann.

Gemäß einer weiteren bevorzugten Ausführungsform weist die Vorrichtung zum Abstapeln von kartenförmigen Datenträgern des Weiteren eine Ausrichteeinrichtung auf, die eingerichtet ist, auf in einem Kartenmagazin bereits abgestapelte Datenträger unmittelbar, oder mittelbar über das Kartenmagazin, so einzuwirken, dass diese dabei einheitlich innerhalb des Kartenmagazins in eine vorbestimmte Lage bzw. Orientierung ausgerichtet werden. Insbesondere kann die Ausrichtungsvorrichtung Druckelemente, wie etwa einen oder mehrere Druckzylinder, aufweisen, die durch eine oder mehrere entsprechende Aussparungen im Kartenmagazin unmittelbar auf die darin gestapelten Datenträger eine Kraft ausüben können, um die gewünschte Ausrichtung insbesondere relativ zu einer oder mehreren Innenwänden des Kartenmagazins zu bewirken. Die somit erreichbare Verfeinerung der Ausrichtung der einzelnen Datenträger relativ zum Kartenmagazin, sowie auch untereinander, kann insbesondere im Hinblick auf gegebenenfalls nachfolgende Prozessschritte, bei der die Datenträger wieder dem Kartenmagazin entnommen werden sollen, vorteilhaft sein, da die Positionierungsgenauigkeit der Datenträger auf diese Weise erhöht wird. Außerdem lassen sich so auch potentielle Stapelfehler innerhalb des Kartenmagazins, etwa durch Verkanten einzelner Datenträger, minimieren bzw. beseitigen.

Gemäß einer weiteren bevorzugten Ausführungsform weist die Vorrichtung zum Abstapeln von kartenförmigen Datenträgern des Weiteren eine Kartenmagazinausgabeeinrichtung auf, die eingerichtet ist, ein mit Datenträgern befülltes Kartenmagazin aus dem Abstapelbereich automatisch zu übernehmen und einer Ausgabeposition an der Kartenmagazinausgabeeinrichtung automatisch zuzuführen. Dabei weist die Kartenmagazinausgabeeinrichtung einen Pufferbereich zur temporären Aufnahme eines von einer Abstapelposition des Abstapelbereichs entnommenen Kartenmagazins auf, und der Pufferbereich weist zumindest eines, bevorzugt sämtliche, der folgenden Elemente auf: (i) eine (zweite) Sensoranordnung, die konfiguriert ist, die Anwesenheit und/oder Abwesenheit eines Kartenmagazins an zumindest einer stromabwärts des Pufferbereichs gelegenen Stelle, insbesondere der Ausgabeposition, der Kartenmagazinausgabeeinrichtung zu detektieren; (ii) ein (zweites) Stoppelement, das konfiguriert ist, einen stromabwärts zur Ausgabeposition hin verlaufenden weiteren Transportweg eines in dem Pufferbereich befindlichen Kartenmagazins zu blockieren, wenn - bevorzugt mittels der Sensoranordnung - festgestellt wird, dass ein stromabwärts des Pufferbereichs gelegener Abschnitt der Kartenmagazinausgabeeinrichtung, insbesondere die Ausgabeposition, noch von einem vorausgegangenen Kartenmagazin belegt ist, und andernfalls den Transportweg freizugeben; (iii) ein (zweites) Transferelement, das konfiguriert ist, ein an einer Abstapelposition des Abstapelbereichs befindliches Kartenmagazin nach dessen Befüllung mit Datenträgern unter Krafteinwirkung auf dieses in den Pufferbereich zu transportieren. Die hier in Klammern gesetzte Bezeichnung "zweite" bzw. "zweites" dient allein der Abgrenzung zu entsprechenden Elementen bzw. Komponenten der Kartenmagazinzuführeinrichtung und ist nicht in dem Sinne zu verstehen, dass die Kartenmagazinausgabevorrichtung zwingend zusätzlich ein entsprechendes erstes Element aufweist. Gleiches gilt andersherum für die oben im Zusammenhang mit der Kartenmagazinzuführeinrichtung eingeführten Bezeichnungen "erste" bzw. "erstes".

Die (zweite) Sensoreinrichtung kann einen oder vorzugsweise mehrere, insbesondere an verschiedenen Stellen der Kartenmagazinausgabeeinrichtung angeordnete Sensoren aufweisen. Sie kann bevorzugt insbesondere im Pufferbereich und/oder an einer stromabwärts von diesem gelegenen Stelle die Anwesenheit bzw. Abwesenheit eines Kartenmagazins sensorisch detektieren. Auf diese Weise kann die Position eines oder mehrerer Kartenmagazine an der Kartenmagazinausgabeeinrichtung sensorisch erfasst und zur optimierten Ablaufsteuerung der Kartenmagazinausgabeeinrichtung, insbesondere im Hinblick auf das automatische Überführen eines Kartenmagazins aus einer Abstapelposition im Abstapelbereich in den Pufferbereich, und/oder von diesem aus weiter stromabwärts verwendet werden.

Das (zweite) Stoppelement stellt die Möglichkeit bereit, eine Kollision eines ersten bereits im Pufferbereich positionierten Kartenmagazins mit einem oder mehreren vorausgehenden sich noch stromabwärts an der Kartenmagazinausgabeeinrichtung befindlichen Kartenmagazinen zu verhindern. Das hat insbesondere den Vorteil, dass dadurch die Position und/oder Orientierung der Kartenmagazine nicht - insbesondere nicht auf unvorhersehbare Weise - durch Kollisionen beeinträchtigt wird und somit der Transportprozess für die Kartenmagazine nicht gestört wird, was andernfalls zu Fehlern oder reduzierten Prozesszeiten, -effizienz und/oder -qualitäten führen könnte.

Das (zweite) Transferelement eröffnet schließlich die Möglichkeit, den automatischen Transfer eines sich an einer zugehörigen Abstapelposition im Abstapelbereich befindlichen Kartenmagazins kontrolliert gemäß einem definierten Prozess, und nicht etwa nur unter Schwerkrafteinwirkung, in den Pufferbereich der Kartenmagazinausgabeeinrichtung zu bewerkstelligen. So können insbesondere die Prozessgeschwindigkeit und -zuverlässigkeit, also auch Prozesseffizienz und -verfügbarkeit sowie die erreichbare Prozessqualität erhöht bzw. sichergestellt werden.

Gemäß einer weiteren bevorzugten Ausführungsform weist die Vorrichtung zum Abstapeln von kartenförmigen Datenträgern des Weiteren eine Zähleinrichtung auf, die konfiguriert ist, die in ein sich an einer Abstapelposition des Abstapelbereichs befindliches Kartenmagazin überführten Datenträger zu zählen und ein entsprechendes Befüllungssignal zumindest dann auszugeben, wenn gemäß dem Zählerstand das Kartenmagazin einen vorbestimmten Befüllungsgrad erreicht hat, insbesondere wenn das Kartenmagazin vollständig befüllt ist. Das Befüllungssignal kann etwa dazu verwendet werden, die Steuerung der Vorrichtung und insbesondere deren Effizienz und Durchlaufzeit zu optimieren. Dies ist insbesondere im Zusammenhang mit einer Kartenmagazinzuführeinrichtung vorteilhaft anwendbar, so dass diese mithilfe des Befüllungssignals rechtzeitig darauf vorbereitet werden kann, ein weiteres, insbesondere ein noch leeres Kartenmagazin zur Übernahme in den Abstapelbereich bereitzustellen. Ähnliches gilt auch im Zusammenhang mit einer Kartenmagazinausgabeeinrichtung, wobei diese anhand des Befüllungssignals rechtzeitig erkennen kann, ob bzw. wann ein soeben gefülltes Kartenmagazin in die Kartenmagazinausgabeeinrichtung zu übernehmen ist, sodass diese rechtzeitig, insbesondere ohne Verlängerung der Durchlaufzeit eines Kartenmagazins durch die gesamte Vorrichtung, in eine entsprechende aufnahmebereite Ausgangsstellung überführt werden kann. Des Weiteren können der aktuelle Zählerstand, bzw. das von ihm abhängige Befüllungssignal auch zur Kontrolle der Vorrichtung und zur Qualitätssicherung des auf ihr ablaufenden Abstapelprozesses herangezogen werden, indem im Rahmen einer Überwachung etwa Abweichungen des Zählerstands oder zeitliche Verzögerungen des Befüllungssignals gegenüber von jeweiligen Erwartungswerten detektiert und signalisiert werden, etwa in Form von Warnsignalen oder Anzeigen auf einer Überwachungs- bzw. Steuerungseinheit der Vorrichtung oder ähnlichem.

Gemäß einer weiteren bevorzugten Ausführungsform weist die Vorrichtung zum Abstapeln von kartenförmigen Datenträgern des Weiteren eine stromaufwärts der Abstapeleinheit angeordnete Inspektionseinrichtung auf. Diese ist eingerichtet, die der Abstapeleinheit mittels der Fördereinrichtung zuzuführenden kartenförmigen Datenträger jeweils einer Inspektionsprüfung zu unterziehen. Die Abstapeleinheit ist konfiguriert, das selektive Lösen von Datenträgern von der Fördereinrichtung in Abhängigkeit von den Ergebnissen der von der Inspektionseinrichtung zuvor durchgeführten Inspektionsprüfung zu bewirken, so dass eine von diesen Ergebnissen abhängige Sortierung der Datenträger erreicht wird. Die Sortierung kann insbesondere dadurch erreicht werden, dass nur solche Datenträger, welche die Inspektionsprüfung erfolgreich bestehen, selektiv an einer Stelle der Fördereinrichtung von dieser gelöst werden, von der aus sie in ein dazu vorgesehenes, an einer Abstapelposition des Abstapelbereichs bereitstehende Kartenmagazin überführt werden können, während andere Datenträger, die die Prüfung nicht bestehen, entweder in ein an einer anderen Abstapelposition des Abstapelbereichs bereitstehendes weiteres Kartenmagazin überführt werden, oder aber an einer anderen Stelle der Vorrichtung von der Förderrichtung gelöst und abgelegt werden.

Gemäß einer weiteren darauf aufbauenden bevorzugten Ausführungsform weist die Vorrichtung zum Abstapeln von kartenförmigen Datenträgern des Weiteren einen ebenfalls bezogen auf die Schwerkraftrichtung unterhalb der Förderstrecke angeordneten und von dem Abstapelbereich verschiedenen Aussortierbereich auf. Die Abstapeleinheit ist dabei des Weiteren eingerichtet, selektiv in Abhängigkeit von den Ergebnissen der von der Inspektionseinrichtung zuvor durchgeführten Inspektionsprüfungen bestimmte der entlang der Fördereinrichtung geförderten kartenförmigen Datenträger von dieser zu lösen, um sie in den Aussortierbereich zu überführen. Der Aussortierbereich kann insbesondere eine weitere Förderstrecke, etwa ein Transportband aufweisen, um die aussortierten Datenträger aus der Vorrichtung auszuschleusen. Darüber hinaus ist es möglich, im Aussortierbereich mehrere verschiedene Datenträgeraufnahmeeinrichtungen, etwa Förderbänder oder Auffangbehälter, vorzusehen, um die aussortierten Datenträger noch weiter zu sortieren, insbesondere anhand des Ergebnisses der Inspektionsprüfung, etwa gemäß einer dazu definierten Klassifikation.

Gemäß einer weiteren darauf aufbauenden bevorzugten Ausführungsform weist die Vorrichtung zum Abstapeln von kartenförmigen Datenträgern des Weiteren eine Rückführschleife auf, die konfiguriert ist, Datenträger, die in den Aussortierbereich überführt wurden, zumindest einmalig zum erneuten Durchlaufen der Inspektionsprüfung zur Inspektionseinrichtung zurückzuführen. Wenn insbesondere eine Mehrzahl von Datenträgeraufnahmeeinrichtungen im Aussortierbereich vorgesehen ist, kann die Rückführschleife bevorzugt auch nur für eine Untermenge aus einer oder mehreren der Datenträgeraufnahmeeinrichtungen vorgesehen sein. So können etwa solche Datenträger, die die Inspektionsprüfung nur knapp nicht bestanden haben oder nur bezüglich einer vorbestimmten Untermenge von bei der Inspektionsprüfung angewandten Prüfkriterien nicht bestanden haben in eine Datenträgeraufnahmeeinrichtung mit Rückführungsschleife überführt werden, während andere der aussortierten Datenträger in eine Datenträgeraufnahmeeinrichtung ohne Rückführschleife überführt werden. So lässt sich wiederum zum einen eine Sortierung der zunächst aussortierten Datenträger gemäß den Prüfergebissen der Inspektionsprüfung erreichen und zum anderen auch im Bereich von akzeptierten Fehlertoleranzen liegenden Fehlaussortierungen begegnen, soweit die erneute Inspektionsprüfung von den zunächst ausgeführten und mithilfe der Rückführschleife erneut einer Inspektionsprüfung zugeführten Datenträger erfolgreich verläuft. Es ist sogar denkbar, für diesen zweiten Durchlauf oder ggf. weitere Durchläufe modifizierte, insbesondere verfeinerte oder ergänzte Prüfungskriterien für die Inspektionsprüfung anzuwenden. So kann etwa zum einen der Gefahr von fehlerhaft erkannten positiven Prüfungsergebnissen begegnet werden und anderseits vermieden werden, dass die möglicherweise nur mit erhöhtem Zeitaufwand durchführbare Inspektionsprüfung mit den modifizierten Prüfungsergebnissen grundsätzlich auf alle Datenträger angewandt werden muss, was zu einer Erhöhung der Durchlaufzeit und somit Verringerung der Prozesseffizienz führen würde.

Ein zweiter Aspekt der Erfindung betrifft ein Verfahren zum Abstapeln von kartenförmigen Datenträgern mit den folgenden Schritten: (a) Transport von vereinzelten kartenförmigen Datenträgern mittels einer Fördereinrichtung stromabwärts entlang einer Förderstrecke; (b) Selektives Übertragen und Abstapeln von entlang der Förderstrecke geförderten kartenförmigen Datenträgern. Dabei werden die kartenförmigen Datenträger so an der Fördereinrichtung gefördert, dass sie dabei in hängender Transportweise an der Fördereinrichtung fixiert sind. Beim selektiven Übertragen und Abstapeln der Datenträger werden bestimmte der entlang der Fördereinrichtung geförderten kartenförmigen Datenträger von dieser gelöst, um sie unmittelbar in ein Kartenmagazin zu überführen und darin zu stapeln, wenn dieses an einer bezogen auf die Schwerkraftrichtung unterhalb der Förderstrecke gelegenen Abstapelposition angeordnet ist, wobei zum selektiven Lösen eines bestimmten entlang der Fördereinrichtung geförderten Datenträgers, auf diesen ein mechanischer Impuls mittels Abblasen des Datenträgers von der Fördereinrichtung übertragen wird, der in Richtung des Kartenmagazins gerichtet ist, in welches der bestimmte Datenträger zu überführen ist.

Im Übrigen sind die vorausgehend in Bezug auf die Vorrichtung gemäß dem ersten Aspekt der Erfindung beschriebenen bevorzugten Ausführungsformen sowie deren Vorteile gleichermaßen auf das Verfahren gemäß dem zweiten Aspekt der Erfindung anwendbar, so dass entsprechende bevorzugte Ausführungsformen des Verfahrens gleichermaßen zur vorliegenden Erfindung gehören.

Ein dritter Aspekt der Erfindung betrifft die Verwendung einer Vorrichtung gemäß dem ersten Aspekt der Erfindung, insbesondere gemäß einer oder mehrerer seiner hierin beschriebenen Ausführungsformen und Varianten, zur Ausführung des Verfahrens gemäß dem zweiten Aspekt der Erfindung.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:
**Fig. 1** schematisch in einer Seitenansicht eine Vorrichtung zum Abstapeln von kartenförmigen Datenträgern, gemäß einer bevorzugten Ausführungsform der Erfindung;
**Fig. 2** schematisch eine Draufsicht auf die Vorrichtung aus Fig. 1;
**Fig. 3** eine perspektivische Ansicht eines Teils einer Kartenmagazinzuführeinrichtung der Vorrichtung, gemäß einer bevorzugten Ausführungsform der Erfindung;
**Fig. 4** eine andere perspektivische Ansicht der Kartenmagazinzuführeinrichtung aus **Fig. 3** zusammen mit einem von ihr getragenen Kartenmagazin;
**Fig. 5** eine perspektivische Ansicht eines Teils einer Hubeinrichtung der Vorrichtung, gemäß einer bevorzugten Ausführungsform der Erfindung;
**Fig. 6** eine Seitenansicht der Hubeinrichtung aus Fig. 5 zusammen mit einem von ihr getragenen Kartenmagazin;
**Fig. 7** eine perspektivische Ansicht eines Teils einer Kartenmagazinausgabeeinrichtung der Vorrichtung einschließlich ihres Pufferbereichs, gemäß einer bevorzugten Ausführungsform der Erfindung;
**Fig. 8** eine perspektivische Ansicht eines anderen Teils einer Kartenmagazinausgabeeinrichtung der Vorrichtung einschließlich ihrer Ausgabeposition, gemäß einer bevorzugten Ausführungsform der Erfindung; und
**Fig. 9** ein Flussdiagramm zur Veranschaulichung einer bevorzugten Ausführungsform des erfindungsgemäßen Verfahrens.

In den nachfolgenden Figuren, werden durchgängig dieselben Bezugszeichen für dieselben oder einander entsprechende Elemente der Erfindung verwendet.

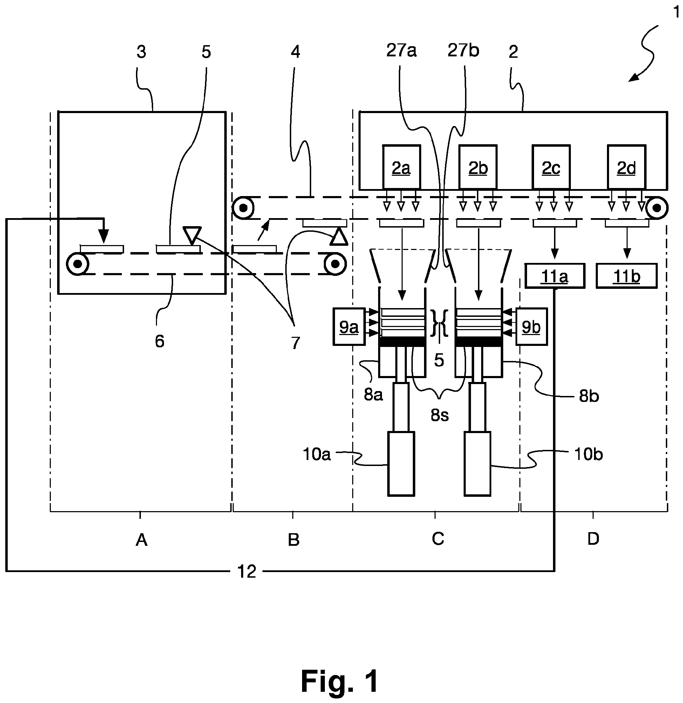

Zunächst wird auf Fig. 1 Bezug genommen. Die dort gezeigte Vorrichtung 1 zum Abstapeln von kartenförmigen Datenträgern 5, insbesondere Chipkarten, weist eine Abstapeleinheit 2 auf, sowie eine Inspektionseinrichtung 3, die optional zugleich als Personalisierungseinrichtung für die Datenträger 5 ausgebildet sein kann. Bezogen auf den Bewegungsstrom der vereinzelt - d.h. insbesondere nicht gemeinsam verpackt oder gestapelt oder untereinander gekoppelt - vorliegenden, abzustapelnden Datenträger 5 durch die Vorrichtung 1 ist die Inspektionseinrichtung 3 in einem stromaufwärts der Abstapeleinheit 2 liegenden Inspektionsbereich A angeordnet.

Zum Transport der Datenträger 5 ist eine Kombination aus einer Zuführeinrichtung 6, die insbesondere als Förderband oder Vakuumriemen ausgebildet sein kann, sowie einer sich daran anschließenden Fördereinrichtung 4 vorgesehen. Die Zuführeinrichtung 6 dient dazu, zum einen die Datenträger 5 innerhalb der Inspektionseinrichtung 3 zu transportieren und zum anderen die Datenträger 5 anschließend der Fördereinrichtung 4 zuzuführen. Dazu weist die Vorrichtung 1 einen Übergabeabschnitt B auf, in dem die Fördereinrichtung 4 so oberhalb der Zuführeinrichtung 6 angeordnet ist, dass auf der Zuführeinrichtung 6 in liegender Transportweise transportierte Datenträger 5 auf die darüber liegende Fördereinrichtung 4 überführt werden können, um von dieser nachfolgend in hängender Transportweise zur Abstapeleinheit 2 transportiert zu werden. Vorzugsweise ist die Fördereinrichtung 4 dazu als Vakuum-Förderband (Vakuumriemen) ausgebildet, also als ein Förderband das dazu ausgestattet ist, die Datenträger an seiner Unterseite durch Ansaugen zu fixieren. Auch die Zuführeinrichtung 6 kann optional als Vakuum-Förderband ausgebildet sein, wobei dort jedoch im Unterschied zur Fördereinrichtung 4, die Datenträger in liegender Transportweise fixiert werden.

Wenn im Übergabebereich B ein Datenträger 5 von der Zuführeinrichtung 6 auf die Fördereinrichtung 4 überführt werden soll, kann dies insbesondere dadurch geschehen, dass die Zuführeinrichtung 6 den Datenträger 5 durch Beaufschlagung seiner der Zuführeinrichtung 6 zugewandten Hauptseite mit Druckluft von diesem ablöst und in Richtung der Fördereinrichtung 4 somit einen Impulsübertrag bewirkt, während gleichzeitig die Fördereinrichtung 4 den Datenträger 5 ansaugt und schließlich auch durch Ansaugen an ihr zum Weitertransport fixiert. In einer anderen Ausführungsform der vorliegenden Erfindung weist die Zuführeinrichtung 6 ein oder mehrere zusätzliche Bauteile auf, die so ausführt sind, dass sie dem Datenträger 5 einen in Richtung der Fördereinrichtung 4 gerichteten mechanischen Impuls übertragen, wenn der Datenträger 5 von der Zuführeinrichtung 6 abgelöst und auf die Fördereinrichtung 4 überführt werden soll. Bei dieser anderen Ausführungsform kann ein Datenträger 5 von der Zuführeinrichtung 6 auf die Fördereinrichtung 4 insbesondere dadurch überführt werden, indem das oder die zusätzlichen Bauteile mit einem Stoß auf die der Zuführeinrichtung 6 zugewandten Hauptseite des Datenträgers 5 wirkt und dadurch diesen von der Zuführeinrichtung 6 ablöst und ihm in Richtung der Fördereinrichtung 4 einen mechanischen Impuls verleiht, während gleichzeitig die Fördereinrichtung 4 den Datenträger 5 ansaugt und schließlich auch durch Ansaugen an ihr zum Weitertransport fixiert. Beispielsweise enthalten die zusätzlichen Bauteile einen oder mehrere Stifte enthalten, die in Richtung der der Zuführeinrichtung 6 zugewandten Hauptseite des Datenträgers 5 bewegbar sind.

Die von der Zuführeinrichtung 6 geförderten Datenträger 5 sowie nachfolgend auch die an der Fördereinrichtung 4 hängenden Datenträger 5 werden bei ihrem Transport jeweils an einem Entladeelement 7, etwa einer geerdeten Bürste aus elektrisch leitendem Material, vorbeigeführt und in Berührung gebracht, um etwaige elektrische Ladungsüberschüsse auf den Datenträgersubstraten zu entladen. Dies dient insbesondere dazu, unerwünschte elektrostatische Effekte beim anschließenden Überführen der Datenträger 5 in ein Kartenmagazin, etwa ein Anhaften an Bauteilen der Vorrichtung 1 oder unvorhergesehene Bewegungen aufgrund elektrischer Krafteinwirkung, zu reduzieren und idealerweise sogar gänzlich zu vermeiden.

In Schwerkraftrichtung gesehen unterhalb der Fördereinrichtung 4 sowie zugleich unterhalb der noch darüber angeordneten Abstapeleinheit 2 sind ein oder mehrere (im vorliegenden Beispiel zwei) Abstapelpositionen innerhalb eines Abstapelbereichs C vorgesehen. In Fig. 1 befindet sich an den beiden dargestellten Abstapelpositionen jeweils ein Kartenmagazin 8a bzw. 8b, das zur Aufnahme eines Stapels von Datenträgern 5 konfiguriert ist.

Die mittels der Fördereinrichtung 4 in den Abstapelbereich C in hängender Transportweise transportierten Datenträger 5 können selektiv, insbesondere abhängig vom Ergebnis ihrer zuvor erfolgten Inspektion an der Inspektionseinrichtung 3, durch Lösen von der Förderrichtung 4 in eines der im Abstapelbereich C an entsprechenden Abstapelpositionen angeordneten Kartenmagazine überführt werden (in Fig. 1 mittels eines schräg aufwärts zeigenden Pfeils dargestellt). Dazu sind an der Abstapeleinheit 2 Drucklufteinheiten 2a bzw. 2b vorgesehen, die konfiguriert sind, bei einer entsprechenden Aktivierung die der Förderrichtung 4 zugewandte Hauptseite eines ausgewählten Datenträgers 5 so mit Druckluft zu beaufschlagen (in Fig. 1 mittels Bündeln hohler Pfeile dargestellt) und dadurch einen Impuls auf ihn zu übertragen, dass er von der Fördereinrichtung gelöst und in das entsprechende darunter befindliche Kartenmagazin 8a bzw. 8b überführt wird (in Fig. 1 mittels abwärts zeigender Pfeile dargestellt). In einer Variante kann das Förderband der Fördereinrichtung 4 dazu Öffnungen enthalten, durch die hindurch durch die entsprechend ausgewählte Drucklufteinheit 2a bzw. 2b ein Druckluftstoß auf die dem Förderband zugewandte Hauptseite des abzulösenden und in das darunter befindliche Kartenmagazin 8a bzw. 8b abzustapelnden Datenträgers 5 gerichtet werden kann.

Zudem ist für jede der Drucklufteinheiten 2a, 2b, vorzugsweise als Bestandteil derselben, eine Zähleinrichtung vorgesehen, welche die Anzahl der durch die jeweilige Drucklufteinheit 2a bzw. 2b jeweils abgeblasenen Datenträger 5 erfasst. Zwischen der Fördereinrichtung 4 und dem jeweiligen Kartenmagazin kann zusätzlich eine, vorzugsweise in Trichterform oder als Leitblech ausgebildete, Zentriereinrichtung 27a bzw. 27b vorgesehen sein, um den abgelösten Datenträger 5 zuverlässig zu einer Aufnahmeöffnung des entsprechenden Kartenmagazins 8a, 8b zu leiten.

An jeder der Abstapelpositionen ist ein Antrieb 10a bzw. 10b mit einem teleskopisch ausfahrbaren Kraftübertragungselement, insbesondere einen teleskopisch ausfahrbaren Druckzylinder, vorgesehen, welches durch eine Aussparung im Boden des jeweiligen Kartenmagazins 8a, 8b in dieses einfahren kann, um ein im Kartenmagazin 8a, 8b entlang von dessen Längsachse bewegliches Stapelträgerelement 8s zu bewegen, bzw. in einer gewünschten Position zu halten. Das jeweilige Stapelträgerelement 8s dient als Grundfläche und Stütze für den Stapel aus den im Kartenmagazin abzustapelnden Datenträgern 5. Die Verwendung eines teleskopisch ausfahrbaren Kraftübertragungselements erlaubt es, etwa im Vergleich zu einem Antrieb mit einer starren Schubstange einer mit der Länge des Kartenmagazins vergleichbaren oder sogar größeren Länge, den erforderlichen Bauraum signifikant zu verkleinern, so dass kompaktere und somit platzsparende Implementierungen der Vorrichtung 1 ermöglicht werden.

Zusätzlich ist an jeder Abstapelposition eine Ausrichteeinrichtung 9a bzw. 9b vorgesehen, die konfiguriert ist, die in dem entsprechenden Kartenmagazin 8a bzw. 8b bereits gestapelten Datenträger 5 entweder mittelbar über eine Bewegung (z.B. Schütteln) des jeweiligen Kartenmagazins 8a, 8b oder unmittelbar durch Eingreifen in eine seitliche Aussparung des jeweiligen Kartenmagazins 8a, 8b an zumindest einer Kante des Kartenmagazins oder einer darin zusätzlich vorgesehenen Ausrichtekante räumlich auszurichten. So kann sich insbesondere bei Datenträgern 5 mit gleichem Formfaktor ein weitgehend kongruenter Stapel ergeben.

Zusätzlich kann, wie in Fig. 1 gezeigt, ein Aussortierbereich D vorgesehen sein, der dazu dient, Datenträger 5, die nicht zuvor in eines der Kartenmagazine 8a, 8b überführt wurden, insbesondere weil sie aufgrund eines Ergebnisses ihrer zuvor erfolgten Inspektionsprüfung zumindest vorläufig als fehlerhaft oder potentiell fehlerhaft erkannt wurden, zu sammeln.

Auch hier können wieder einer oder mehrere Drucklufteinheiten 2c bzw. 2d in der Abstapeleinheit 2 vorgesehen sein, um an entsprechenden Stellen selektiv die für den Aussortierbereich D vorgesehenen Datenträger 5 von der Fördereinrichtung 4 zu lösen und auf entsprechende Sammelvorrichtungen, die insbesondere als Förderbänder 11a bzw. 11b ausgebildet sein können, zu überführen. Im vorliegenden Beispiel ist das Förderband 11a dazu vorgesehen, solche Datenträger 5 aufzunehmen und zu sammeln, bei denen eine erneute Inspektionsprüfung durch die Inspektionseinrichtung 3 vorgenommen werden soll, also etwa Datenträger die reparierbar beeinträchtigt sind oder bei denen die Personalisierung korrigiert oder erneut durchgeführt werden kann. Diese Datenträger werden daher mittels einer - hier nur schematisch dargestellten - Rückführschleife 12 wieder der Inspektionseinheit 3 für einen erneuten Durchlauf durch die Vorrichtung 1 zugeführt. Das Förderband 11b ist dagegen dazu vorgesehen, die endgültig als fehlerhaft erkannten Datenträger 5 zu sammeln, also etwa Datenträger die unreparierbar beschädigt sind, weil sie beispielsweise defekte Chips oder Fehlaufdrucke enthalten.

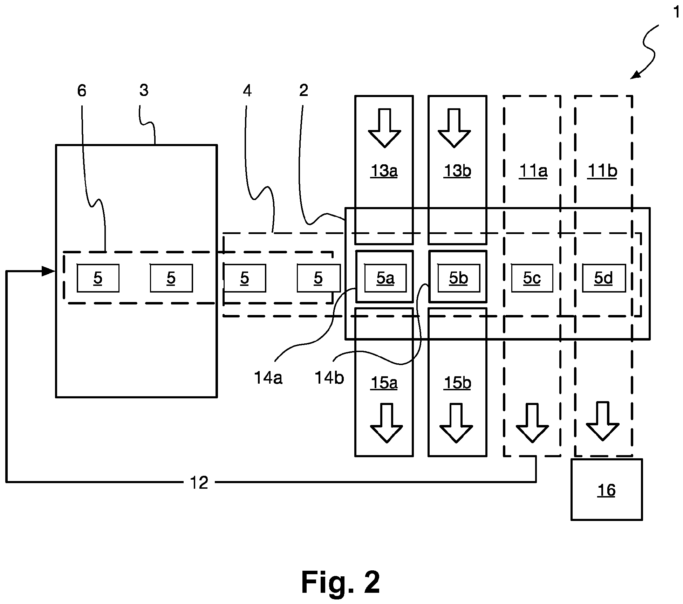

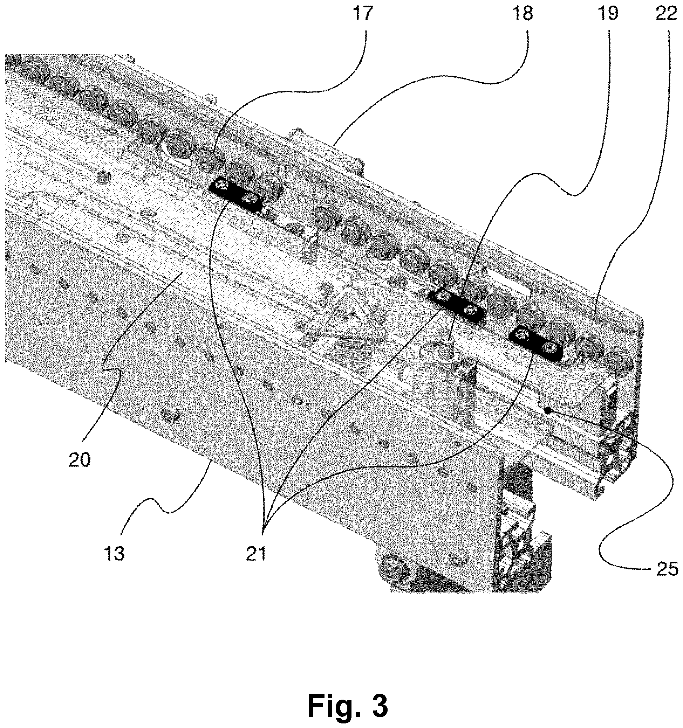

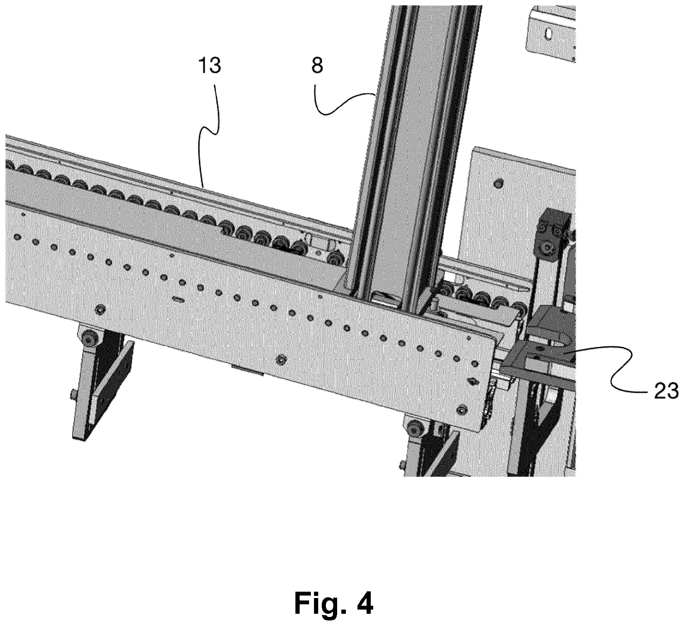

**Fig. 2** zeigt dieselbe Vorrichtung 1 nochmals schematisch, diesmal in einer Draufsicht, wobei eine Reihe von im Zusammenhang mit Fig. 1 erläuterten Bauteilen der Vorrichtung 1 zum Zwecke der besseren Darstellung hier nicht gezeigt sind. Fig. 2 illustriert insbesondere die Handhabung der Kartenmagazine. Dazu sind zwei, vorzugsweise parallel zueinander angeordnete, Kartenmagazinzuführeinrichtungen 13a bzw. 13b vorgesehen, mittels derer leere bzw. aufnahmefähige Kartenmagazine zu ihrer Befüllung mit Datenträgern 5 der Abstapeleinheit 2 automatisch zugeführt werden können. Einzelheiten dieser Kartenmagazinzuführeinrichtungen werden weiter unten im Zusammenhang mit den Figuren 3 und 4 erläutert. Von den Kartenmagazinzuführeinrichtungen 13a und 13b können die Kartenmagazine jeweils auf eine zugeordnete Abstapelposition automatisch transferiert werden, die jeweils auf einem vertikal verfahrbaren Hubtisch einer Hubeinrichtung 14a bzw. 14b angeordnet ist.

In dem in Fig. 2 gezeigten Beispiel wird also der Datenträger 5a in ein erstes Kartenmagazin 8a, das über die Kartenmagazinzuführeinrichtung 13a automatisch zugeführt wurde, überführt und dort abgestapelt, während auf gleiche Weise ein weiterer Datenträger 5b in ein weiteres Kartenmagazin 8b überführt und dort abgestapelt wird, welches sich auf der zweiten Hubeinrichtung 14b befindet, die über die Kartenmagazinzuführeinrichtungen 13b mit Kartenmagazinen automatisch beschickt wird. Nachdem die Kartenmagazine 8a, 8b vollständig durch mit darin abgestapelten Datenträgern 5 befüllt sind, was etwa mittels eines Zählers und einem Vergleich des Zählerstands mit einer Sollanzahl von Datenträgern detektiert werden kann, werden diese automatisch von der Abstapelposition an der jeweiligen Hubeinrichtung 14a bzw. 14b in eine Kartenmagazinausgabeeinrichtung 15a bzw. 15b transferiert, die der jeweiligen Hubeinrichtung 14a bzw. 14b nachgeschaltet ist. Die weiteren Datenträger 5c und 5d, welche für den Aussortierbereich D vorgesehen sind, werden, wie schon vorausgehend beschrieben, auf ein zugeordnetes Förderband 11a bzw. 11b überführt. Der Datenträger 5c wird im vorliegenden Beispiel sodann über die Rückführungsschleife 12 erneut der Inspektionseinrichtung 3 zugeführt, während der als endgültig fehlerhaft erkannte Datenträger 5d durch das Förderband 11b einem Auffangbehälter 16 für fehlerhafte Datenträger zugeführt wird. Auf diese Weise kann mittels der Drucklufteinrichtungen 2a bis 2d eine Sortierung der Datenträger 5 auf Basis der Ergebnisse ihrer vorangegangenen Inspektionsprüfungen vorgenommen werden.

Fig. 3 zeigt eine perspektivische Ansicht eines Teils einer Kartenmagazinzuführeinrichtung 13 (bzw. 13a oder 13b) der Vorrichtung 1 gemäß einer bevorzugten Ausführungsform der Erfindung. Die Kartenmagazinzuführeinrichtung 13 ist als Laufschiene ausgebildet, an deren Oberseite eine im Querschnitt U-förmig gestaltete Laufrinne vorgesehen ist. An beiden Seitenwänden dieser Laufrinne ist jeweils eine Vielzahl von seriell entlang des Verlaufs der Laufrinne angeordneten Laufrollen 17 vorgesehen.

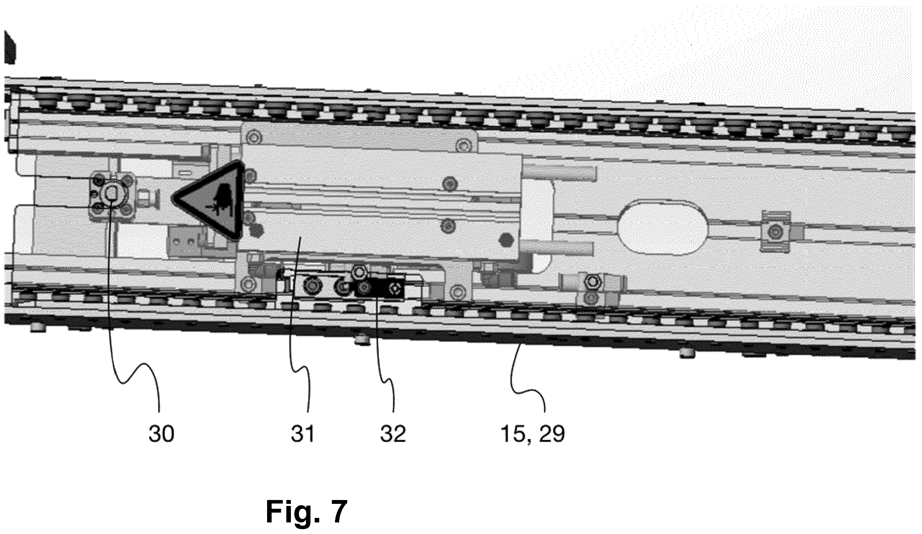

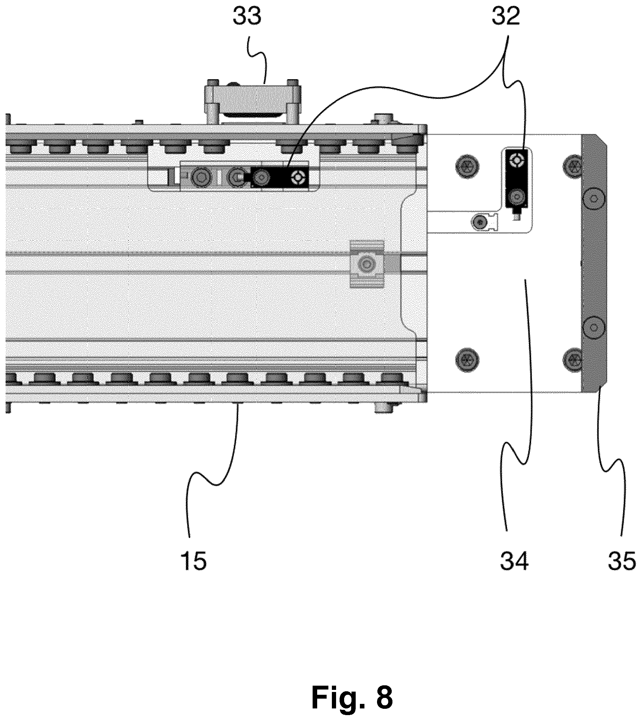

**Fig. 4** zeigt dazu, wie ein Kartenmagazin 8, zum automatischen Transport entlang der Kartenmagazinzuführeinrichtung 13 auf den Laufrollen 17 in aufrechter Stellung positioniert wird, und entlang der Laufrinne durch die Laufrollen 17 gestützt transportiert werden kann. Dazu können die Laufrollen 17 entweder angetrieben sein und/oder die Laufrinne gegenüber der Horizontalen leicht gekippt sein und somit eine schiefe Ebene darstellen, sodass das Kartenmagazin 8 (auch) durch die Schwerkraft angetrieben entlang der Laufrinne zu einer Abstapelposition des Abstapelbereichs, die in Fig. 4 mittels eines Hubtisches 23 einer entsprechenden Hubeinrichtung 14a, b dargestellt wird, transportiert werden. Anstelle der Förderung mittels der angetriebenen Laufrollen oder in Kombination damit ist auch eine Ketten- oder Bandförderung der Kartenmagazine entlang der Kartenmagazinzuführeinrichtung möglich. Gleiches gilt entsprechend für die weiter unten unter Bezugnahme auf die Figuren 7 und 8 beschriebene Kartenmagazinausgabeeinrichtung, die insbesondere ebenfalls auch eine schiefe Ebene darstellen kann.

Wiederum auf **Fig. 3** bezugnehmend, werden nun verschiedene Funktionselemente der Kartenmagazinzuführeinrichtung 13 erläutert. Ein Stoppelement 18, das insbesondere als Druckzylinder ausgebildet sein kann, der in die Laufrinne der Kartenmagazinzuführeinrichtung 13 eingefahren werden kann, dient dazu, einen sich von dort aus bezogen auf die Bewegungsrichtung der Kartenmagazine 8 stromabwärts liegenden Transferbereich der Kartenmagazinzuführeinrichtung 13 zu definieren. Er hat dabei insbesondere die Funktion, nachrückende weitere Kartenmagazine 8 vor deren jeweiligen Eintritt in den Transferbereich in die Laufrinne zu stoppen, und den weiteren Weg erst durch Ausfahren aus der Laufrinne freizugeben, wenn ein oder mehrere vorbestimmte Kriterien erfüllt sind, insbesondere wenn der Transferbereich nicht (mehr) von einem vorausgehenden Kartenmagazin 8 belegt ist. Um die Anwesenheit von einem oder mehreren Kartenmagazinen 8 an der Kartenmagazinzuführeinrichtung 13 zu detektieren, sind mehrere (erste) Sensoren 21, die zusammen eine (erste) Sensoranordnung bilden, an verschiedenen Stellen der Kartenmagazinzuführeinrichtung 13 vorgesehen. Deren Signale können mittels einer (nicht explizit dargestellten) Steuerung ausgewertet werden und entsprechende Ansteuersignale für die einzelnen Funktionselemente der Kartenmagazinzuführeinrichtung 13 daraus abgeleitet werden, insbesondere Ansteuersignale für das Stoppelement 18. Die Steuerung kann etwa (i) eine globale Steuerung der gesamten Vorrichtung 1 oder (ii) eine Steuerung nur für den Transport und die Handhabung der Kartenmagazine an der Vorrichtung 1 oder (iii) eine Steuerung nur speziell der Kartenmagazinzuführeinrichtung 13 sein.

Des Weiteren weist die Kartenmagazinzuführeinrichtung 13 in ihrem Transferbereich ein (erstes) Mitnehmerelement 19 auf, welches insbesondere multifunktional sein kann. Es handelt sich dabei im Wesentlichen um einen von einer Unterseite der Kartenmagazinzuführeinrichtung 13 aus in die Laufrinne einfahrbaren Stift o. ä., der angeordnet ist, im eingefahrenen Zustand ein Kartenmagazin 8, welches sich in dem Transferbereich befindet, an der Weiterfahrt zur nachfolgenden Abstapelposition im Abstapelbereich C zu hindern, solange die Abstapelposition noch nicht frei ist bzw. noch nicht zur Prozessierung eines weiteren Kartenmagazins 8 bereit ist. Wenn und insbesondere sobald dies jedoch der Fall ist, wird das Mitnehmerelement 19 aus der Laufrinne herausgefahren bzw. eingezogen, um den Weg für das Kartenmagazin 8 in Richtung der Abstapelposition freizugeben.

Des Weiteren weist die Kartenmagazinzuführeinrichtung 13 ein (erstes) Transferelement 20 auf, bei dem es sich insbesondere um ein entlang der Laufrinne translatorisch bewegliches und angetriebenes Schubelement handeln kann. Seine Funktionsweise ist wie folgt: Wenn ein auf die nachfolgende Abstapelposition zu überführendes Kartenmagazin 8 im Transferbereich eingetroffen ist, was mittels wenigstens eines der Sensoren 21 detektiert wird, wird es, wie schon vorausgehend beschrieben, zunächst durch das ausgefahrene Mitnehmerelement 19 an der Weiterfahrt gehindert, welches dazu bevorzugt in eine erste Stellung am bzw. nahe des stromabwärtigen Endes der Laufrinne gebracht ist. Entlang des Verfahrweges des Mitnehmerelements ist im Transferbereich in der Laufrinne eine Aussparung 25 vorgesehen, durch die das Mitnehmerelement geführt ist. Wird dann nachfolgend das Mitnehmerelement 19 entsprechend aus der Laufrinne herausgefahren, um für das Kartenmagazin 8 den Weg zur Weiterfahrt auf die Abstapelposition freizugeben, rollt das Kartenmagazin 8 auf den Laufrollen 17 in Richtung der Abstapelposition weiter. Das Mitnehmerelement 19 wird daraufhin entlang der Längsachse der Kartenmagazinzuführeinrichtung 13 durch die Aussparung 25 hin zu einer zweiten stromaufwärts gelegenen Stellung zu verfahren, um es stromaufwärts des Kartenmagazins 8 zu positionieren und es sodann wieder ganz in die Laufrinne auszufahren. Das Verfahren entlang der Längsachse der Kartenmagazinzuführeinrichtung 13 erfolgt durch entsprechenden Antrieb mit dem Mitnehmerelement 19 gekoppelten Transferelement 20. Anschließend wird, das Mitnehmerelement 19 in entgegengesetzter Richtung durch das Transferelement 20 verfahren, wobei dieses eine Schubkraft auf das Mitnehmerelement 19 und dieses wiederum auf das Kartenmagazin 8 ausübt, um das Kartenmagazin vollständig auf die Abstapelposition zu schieben. Schließlich sind an Kartenmagazinzuführeinrichtung 13 beidseitig noch Kippschutzleisten 22 vorgesehen, die dazu dienen, die entlang der Laufrinne transportierten Kartenmagazine 8 bei deren Transport seitlich abzustützen und gegen Kippen oder Verdrehen zu sichern bzw. sie zu führen.

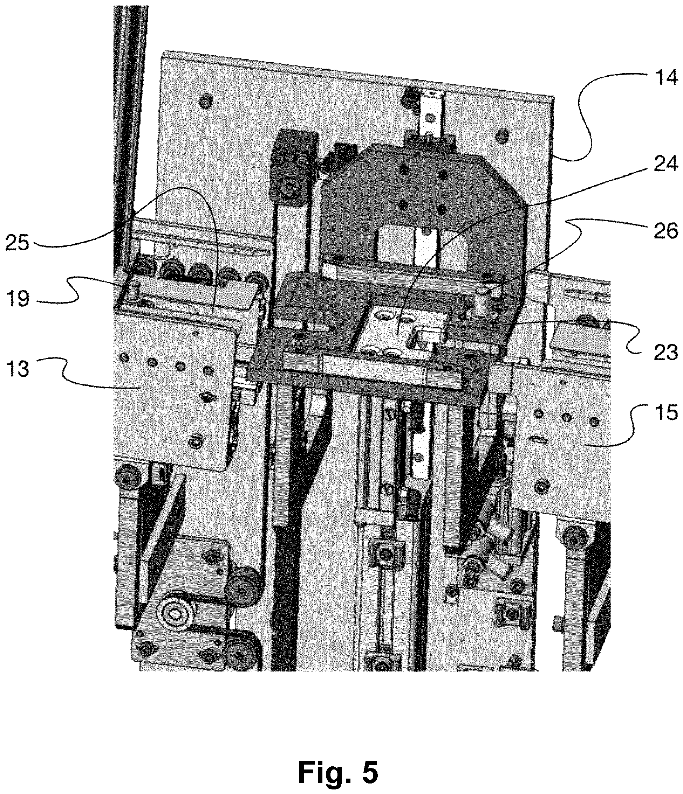

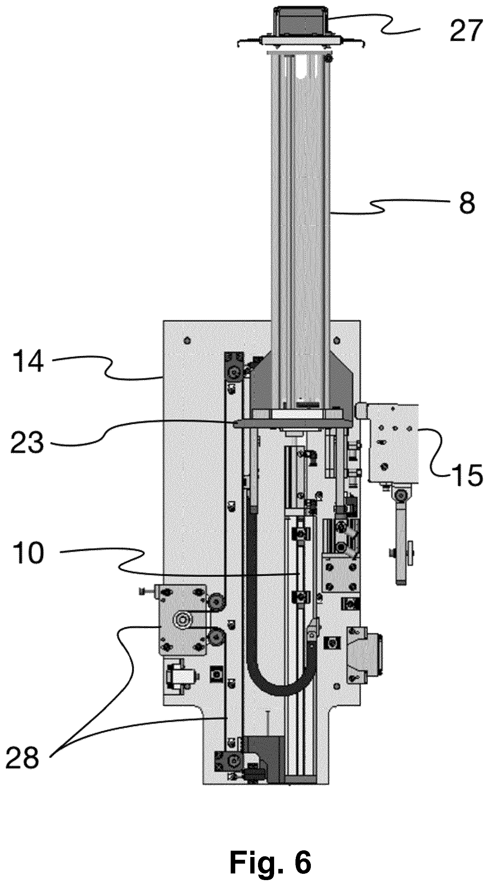

**Fig. 5** zeigt eine perspektivische Ansicht eines Teils einer Hubeinrichtung 14 (bzw. 14a und 14b) der Vorrichtung, gemäß einer bevorzugten Ausführungsform. Die Hubeinrichtung 14 ist zwischen einer stromaufwärts davon angeordneten Kartenmagazinzuführeinrichtung 13 sowie einer stromabwärts davon angeordneten Kartenmagazinausgabeeinrichtung 15 so angeordnet, dass der Hubtisch 23 der Hubeinrichtung 14 zwischen beiden positioniert ist. Auf dem Hubtisch 23 ist eine Abstapelposition 24 definiert, die dazu dient, ein aufrechtstehendes Kartenmagazin 8 aufzunehmen und zu stützen (vgl. **Fig. 6**). An dem Hubtisch 23 ist zudem ein ausfahrbarer Anschlag 26 vorgesehen, der insbesondere als Stoppzylinder ausgebildet sein kann. Er dient dazu, ein Kartenmagazin 8, welches sich an der Abstapelposition 24 befindet, an der Weiterfahrt in Richtung der Kartenmagazinausgabeeinrichtung 15 zu hindern, wenn bzw. solange die Befüllung des Kartenmagazins 8 an der Abstapelposition 24 noch nicht abgeschlossen ist. Wenn die Befüllung abgeschlossen ist, wird der Anschlag 26 jedoch eingezogen, sodass die Weiterfahrt des Kartenmagazins 8 zur Kartenmagazinausgabeeinrichtung 15 ermöglicht wird.

Die weitere Funktion der Hubeinrichtung 14 wird nun unter Bezugnahme auf **Fig. 6** erläutert, die eine Seitenansicht der Hubeinrichtung 14 darstellt. Der Hubtisch 23 ist mittels eines entsprechenden Antriebs 28, der bevorzugt als Riemen- oder Kettenantrieb ausgebildet ist, senkrecht zu seiner Tischfläche verfahrbar und dazu beispielsweise in entlang der Verfahrrichtung verlaufenden Schienen gelagert. Auf dem Hubtisch 23, kann - wie in Fig. 6 dargestellt - an der Abstapelposition 24 des Hubtischs 23 ein Kartenmagazin 8 von der Kartenmagazinzuführeinrichtung 13 kommend in aufrecht stehender Stellung aufgenommen werden. Im Anschluss an die Aufnahme eines Kartenmagazins 8 wird der Hubtisch 23 aufwärts in Richtung einer Zentriereinrichtung 27 (bzw. 27a, 27b) verfahren, welche dazu dient und eingerichtet ist, das Kartenmagazin 8 an dessen oberen Ende zu fixieren und zugleich die bereits im Zusammenhang mit Fig. 1 beschriebene Zentrierungsfunktion bei der Überführung von Datenträgern 5 von der Fördereinrichtung 4 in das entsprechende Kartenmagazin 8 bereitzustellen.

Die Hubeinrichtung 14 weist darüber hinaus einen Antrieb 10 mit einem teleskopisch ausfahrbaren Kraftübertragungselement auf, das unterhalb des Hubtischs 23 angeordnet ist und durch eine entsprechende Aussparung am unteren Ende des Kartenmagazins in dieses einfahren kann. Wie schon vorausgehend unter Bezugnahme auf Fig. 1 erläutert, dient es dazu, an ein Stapelträgerelement 8s des Kartenmagazins 8 zu koppeln und das Stapelträgerelement 8s und somit einen gegebenenfalls darauf gelagerten Stapel von bereits abgestapelten Datenträgern 5 entlang der Längsachse des Kartenmagazins 8 in Abhängigkeit von dessen Befüllungsgrad (bzw. der Anzahl bereits darin eingebrachter Datenträger 5) zu bewegen. Dies dient insbesondere dazu, die Überführungsstrecke für die Datenträger 5 von der Fördereinrichtung 4 zum oberen Ende des Stapels aus Datenträgern 5 für aufeinander folgende Datenträger 5 zumindest im Wesentlichen konstant zu halten.

**Fig. 7** zeigt eine perspektivische Ansicht eines Teils einer Kartenmagazinausgabeeinrichtung 15 (bzw. 15a, 15b) der Vorrichtung 1, gemäß einer bevorzugten Ausführungsform der Erfindung. Ihr Aufbau entspricht weitgehend der der Kartenmagazinzuführeinrichtung 13. Der in Fig. 7 dargestellte Abschnitt der Kartenmagazinausgabeeinrichtung 15 stellt insbesondere einen Abschnitt eines Pufferbereichs der Kartenmagazinausgabeeinrichtung 15 dar, der als derjenige Abschnitt, definiert ist, der sich zwischen dem stromaufwärtigen Ende der Kartenmagazinzuführeinrichtung 15 (der Hubeinrichtung 23 benachbart) und einem weiter stromabwärts gelegenen und in Fig. 8 dargestellten (zweiten) Stoppelement 33 erstreckt. Der Pufferbereich weist ein (zweites) Mitnehmerelement 30 auf, das ähnlich dem (ersten) Mitnehmerelement 19 der Kartenmagazinzuführeinrichtung 13 ausgebildet ist. Es dient dazu, wenn ein fertig prozessiertes Kartenmagazin 8 aus der Abstapelposition 24 des Hubtisch 23 automatisch entnommen werden soll, durch entsprechende Aussparungen in der Kartenmagazinausgabeeinrichtung 15 sowie den Hubtisch 23 (vgl. Fig. 5) unter das Kartenmagazin zu verfahren und in eine bodenseitige Aussparung oder Öffnung des Kartenmagazins 14 einzugreifen und es anschließend damit in den Pufferbereich zu ziehen. Dazu ist in dem Pufferbereich des Weiteren ein (zweites) Transferelement 31 vorgesehen, was mit dem Mitnehmerelement 30 gekoppelt ist oder werden kann, und konfiguriert ist, dieses zu verfahren, und insbesondere nach dessen Kopplung an das Kartenmagazin 8 in stromabwärtige Richtung zu ziehen, um das Kartenmagazin 8 automatisch in den Pufferbereich zu überführen. Des Weiteren ist im Pufferbereich zumindest ein Sensor 32 vorgesehen, der zusammen mit weiteren in Fig. 8 dargestellten Sensoren eine (zweite) Sensoreinheit bildet, die dazu dient, die Position von Kartenmagazinen 8 an der Kartenmagazinausgabeeinrichtung 15 zu detektieren.

Zur weiteren Erläuterung der Kartenmagazinausgabeeinrichtung 15 wird nun auf **Fig. 8** Bezug genommen, welche eine perspektivische Ansicht des stromabwärtigen Teils der Kartenmagazinausgabeeinrichtung 15 zeigt. An seinem stromabwärtigen Ende weist die Kartenmagazinausgabeeinrichtung 15 eine Ausgabeposition 34 mit einer optionalen Anschlagsleiste 35 auf, an der von der Vorrichtung 1 fertig prozessierte Kartenmagazine 8 entnommen werden können. Zumindest einer der Sensoren 32 ist so angeordnet, dass mit seiner Hilfe detektiert werden kann, ob sich ein Kartenmagazin 8 an der Ausgabeposition 34 befindet. Ist dies der Fall, fährt das (zweite) Stoppelement 33 in die Laufrinne der Kartenmagazinausgabeeinrichtung 15 ein, um ein Nachrücken weiterer Kartenmagazine 8 in die Ausgabeposition 34 temporär zu blockieren, bis diese wieder frei wird.

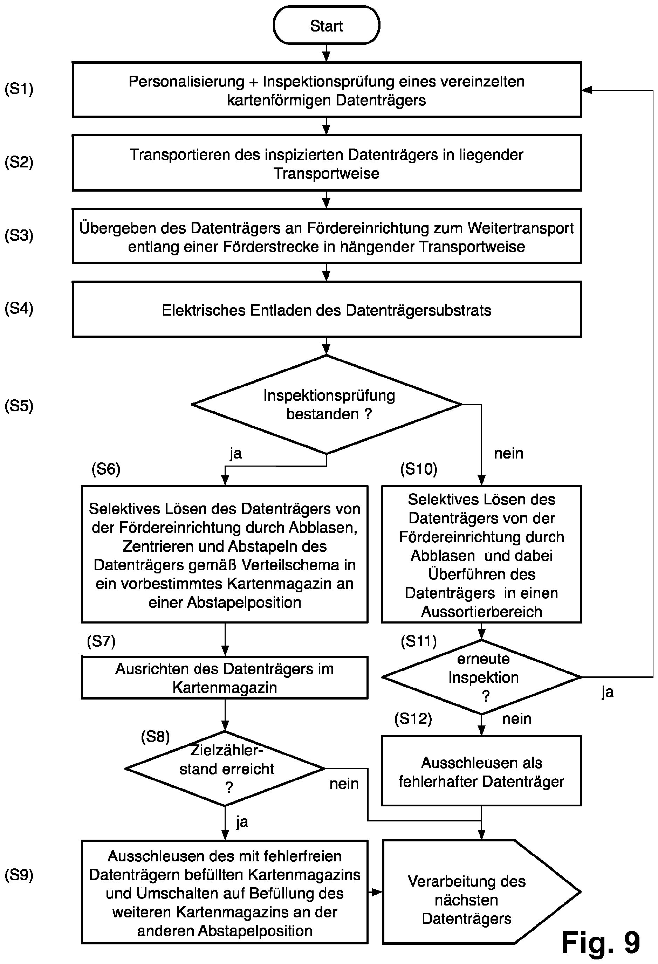

**Fig. 9** zeigt schließlich ein Flussdiagramm zur Veranschaulichung einer bevorzugten Ausführungsform des erfindungsgemäßen Verfahrens. Das Verfahren wird nachfolgend unter Bezugnahme auf die entsprechende Verwendung einer Vorrichtung 1 - wie vorausgehend unter Bezugnahme auf die Figuren 1 bis 8 beschrieben - erläutert.

Bei dem Verfahren wird in einem Schritt S1 eine Personalisierung eines Datenträgers 5 vorgenommen, gefolgt von einer Inspektionsprüfung desselben. Die Inspektionsprüfung kann sich dabei insbesondere auf die mechanische und/oder elektrische Unversehrtheit des Datenträgers und/oder auf eine Überprüfung seiner zuvor erfolgten Personalisierung, etwa mittels Einschreiben oder Aufdrucken von Daten, beziehen. Sodann wird der Datenträger 5 in einem weiteren Schritt S2 mittels der Zufuhreinrichtung 6 als vereinzelter Datenträger und in liegender Transportweise in den Übergabeabschnitt B der Vorrichtung 1 gefördert. Dort findet in einem Schritt S3 ein Übergeben des Datenträgers 5 an die Förderrichtung 4 zum Weitertransport des Datenträgers 5 entlang einer Förderstrecke und in hängender Transportweise statt. Während oder anschließend an diesen Weitertransport wird der Datenträger 5 in einem Schritt S4 mit dem Entladungselement 7 in Kontakt gebracht, um gegebenenfalls auf dem Datenträger vorhandene Ladungsüberschüsse abzuführen und den Datenträger 5 dadurch zu entladen.

Wenn der Datenträger 5 die Abstapeleinheit 2 erreicht hat, wird er in Abhängigkeit von dem Ergebnis der im Schritt S1 erfolgten Inspektionsprüfung weiter behandelt. Hat er die Inspektionsprüfung bestanden (S5 - ja) wird er in einem weiteren Schritt S6 selektiv mittels eines mechanischen Impulses (der durch druckluftgetriebenem Abblasen auf die der Fördereinrichtung zugewandte Hauptseite des Datenträgers übertragen wird) von der Förderrichtung 4 gelöst, mittels der einen Zentriereinrichtung 27 bezüglich einer Aufnahmeöffnung eines an einer entsprechenden Abstapelposition 24 auf dem Hubtisch 23 befindlichen Kartenmagazins 8 zentriert und in dieses übergeführt und darin abgestapelt.

Wenn, wie in der Vorrichtung gemäß Fig. 1 dargestellt, mehrere Kartenmagazine 8a, 8b bzw. Abstapelpositionen vorhanden sind, wird mittels eines Verteilschemas automatisch ausgewählt, an welcher Stelle das selektive Lösen des Datenträgers 5 von der Fördereinrichtung 4 erfolgt, und dementsprechend in welches der Kartenmagazine 8a, 8b der Datenträger 5 überführt wird. In einer vorteilhaften Variante, ist das Verteilschema so definiert, dass zunächst alle Datenträger 5 in dasselbe Kartenmagazin 8a abgestapelt werden, bis dieses vollständig befüllt ist, wonach das Überführen und Abstapeln der nachfolgenden weiteren Datenträger 5 in das weitere Kartenmagazin 8b erfolgt, bis dieses wiederum vollständig gefüllt ist, wonach das Abstapeln wieder in ein inzwischen anstelle des ersten Kartenmagazins 8a nachgerücktes weiteres Kartenmagazin folgt.

Wenn der Datenträger 5 im entsprechenden Kartenmagazin 8a, 8b abgestapelt ist, folgt in einem weiteren Schritt S7, der entweder für jeden der abgestapelten Datenträger 5 einzeln, oder jeweils für mehrere gemeinsam erfolgen kann, ein Ausrichten durch die entsprechende Ausrichtereinrichtung 9a, 9b, wie schon vorausgehend unter Bezugnahme auf Fig. 1 im Einzelnen beschrieben. Die in ein Kartenmagazin 8a, 8b überführten Datenträger 5 werden mittels eines Zählers gezählt. Wird mit dem Abstapeln des Datenträgers 5 ein Zielzählerstand des Zählers erreicht, der zu einer vollständigen Befüllung des Kartenmagazins 8 korrespondiert (Schritt S8 - ja), so wird in einem weiteren Schritt S9 das mit den Datenträgern 5 befüllte Kartenmagazin 8a, 8b in die Kartenmagazinausgabeeinrichtung 15a bzw. 15b automatisch überführt, und kann dort schließlich an deren Ausgabeposition 34 entnommen (ausgeschleust) werden. Andernfalls (S8 - nein), folgt die Verarbeitung des nächsten Datenträgers 5, der sodann, falls er die Inspektionsprüfung ebenfalls bestanden hat (S6 - ja) auf gleiche Weise in das gerade zu befüllende und noch aufnahmebereite Kartenmagazin 8a bzw. 8b abgestapelt wird.

Hat ein Datenträger 5 die Inspektionsprüfung jedoch nicht bestanden (S5 - nein), so geht das Verfahren stattdessen von Schritt S5 aus nicht zu Schritt S6, sondern zu Schritt S10 über, bei dem der Datenträger an einer anderen Stelle der Fördereinrichtung 4 selektiv von dieser gelöst wird, insbesondere auf gleiche Weise abgeblasen wird, und dabei in einen Aussortierbereich D der Vorrichtung 1 überführt wird. Wenn die Inspektionsprüfung eine Klassifizierung der Datenträger, welche die Inspektionsprüfung nicht bestanden haben, vorgenommen hat, wird der Datenträger in Abhängigkeit von seiner entsprechenden Einordnung in die Klassifizierung im Schritt S11 entweder erneut über die Rückführungsschleife 12 der Personalisierungs- und Inspektionseinrichtung 3 für einen weiteren Durchlauf zugeführt (S11 - ja; etwa wenn nur die Personalisierungsdaten bei der Inspektionsprüfung als unvollständig oder anderweitig mangelhaft erkannt wurden, der Datenträger aber ansonsten intakt war), oder endgültig in einem weiteren Schritt S12 als fehlerhafter Datenträger ausgeschleust. Der Schritt S11 kann insbesondere auch mit Schritt S10 auf solche Weise kombiniert werden, dass für diejenigen Datenträger 5 bzw. 5c (vgl. Fig. 1), welche über die Rückführschleife 12 zurückgeführt werden sollen, ein eigenes Förderband 11a vorgesehen wird und ein selektives Lösen und Überführen dieser Datenträger 5, 5c auf dieses Förderband 11a erfolgt, während die als endgültig fehlerhaft klassifizierten Datenträger 5 bzw. 5d auf gleiche Weise auf ein weiteres Förderband 11b ohne Anschluss an die bzw. eine Rückführschleife 12 überführt werden.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zu Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand abgewichen wird.

### BEZUGSZEICHENLISTE

- A: Inspektionsbereich
- B: Übergabeabschnitt
- C: Abstapelbereich
- D: Aussortierbereich

- 1: Vorrichtung zum Abstapeln von kartenförmigen Datenträgern
- 2: Abstapeleinheit
- 2a-d: Drucklufteinheiten
- 3: Inspektionseinrichtung, optional zugleich Personalisierungseinrichtung
- 4: Fördereinrichtung
- 5, 5a-d: Kartenförmiger Datenträger, insbesondere Chipkarte
- 6: Zuführeinrichtung für vereinzelte Datenträger
- 7: Entladungselement(e), insbesondere Entladungsbürste(n)
- 8, 8a,b: Kartenmagazin
- 8s: Stapelträgerelement
- 9a,b: Ausrichteeinrichtung
- 10a,b: Antrieb mit teleskopisch ausfahrbarem Kraftübertragungselement
- 11a: Förderband für Transport von vorläufig als fehlerhaft bewerteten Datenträgern
- 11b: Förderband für Transport von endgültig als fehlerhaft bewerteten Datenträgern
- 12: Rückführschleife
- 13, 13a,b: Kartenmagazinzuführeinrichtung
- 14a,b: Hubeinrichtungen
- 15, 15a,b: Kartenmagazinausgabeeinrichtung
- 16: Auffangbehälter für fehlerhafte Datenträger
- 17: Laufrolle
- 18: (erstes) Stoppelement
- 19: (erstes) Mitnehmerelement
- 20: (erstes) Transferelement
- 21: (erste) Sensoren, insgesamt (erste) Sensoranordnung
- 22: Kippschutzleiste
- 23: verfahrbarer Hubtisch (mit Abstapelposition) der Hubeinrichtung
- 24: Abstapelposition
- 25: Aussparung im Transferbereich der Kartenmagazinzuführeinrichtung
- 26: Anschlag, insbesondere Stoppzylinder
- 27, 27a,b: Zentriereinrichtung mit Kartenmagazinhalterung
- 28: Riemen- oder Kettenantrieb für Hubtisch
- 29: Pufferbereich der Kartenmagazinausgabeeinrichtung
- 30: (zweites) Mitnehmerelement
- 31: (zweites) Transferelement
- 32: (zweite) Sensoren, insgesamt (zweite) Sensoranordnung
- 33: (zweites) Stoppelement
- 34: Ausgabeposition der Kartenmagazinausgabeeinrichtung
- 35: Anschlagsleiste

## Patentansprüche

1. Vorrichtung (1) zum Abstapeln von kartenförmigen Datenträgern (5), aufweisend:
eine Fördereinrichtung (4) zum Transport von vereinzelten kartenförmigen Datenträgern (5) stromabwärts entlang einer Förderstrecke;
eine Abstapeleinheit (2) zum selektiven Übertragen und Abstapeln von entlang der Förderstrecke geförderten kartenförmigen Datenträgern (5) ;
wobei die Fördereinrichtung (4) eingerichtet ist, die kartenförmigen Datenträger (5) so zu fördern, dass diese dabei in hängender Transportweise an ihr fixiert sind;
die Abstapeleinheit (2) eingerichtet ist, selektiv bestimmte der entlang der Fördereinrichtung (4) geförderten kartenförmigen Datenträger (5) von dieser zu lösen, um sie unmittelbar in ein Kartenmagazin (8; 8a, 8b) zu überführen und darin zu stapeln, wenn dieses an einer bezogen auf die Schwerkraftrichtung unterhalb der Förderstrecke gelegenen Abstapelposition (24) in einem Abstapelbereich (C) angeordnet ist, **dadurch gekennzeichnet, dass**
die Abstapeleinheit (2) ferner eingerichtet ist, zum selektiven Lösen eines bestimmten entlang der Fördereinrichtung (4) geförderten Datenträgers (5), auf diesen einen mechanischen Impuls mittels Abblasen des Datenträgers (5) von der Fördereinrichtung (4) zu übertragen, der in Richtung des Kartenmagazins gerichtet ist, in welches der bestimmte Datenträger zu überführen ist.

2. Vorrichtung (1) gemäß Anspruch 1, wobei die Abstapeleinheit (2) so eingerichtet ist, dass beim Abblasen ein gegen den zunächst an der Fördereinrichtung (4) hängenden Datenträger (5) gerichteter Luftstrom erzeugt wird, der eine den Datenträger (5) von der Fördereinrichtung (4) abstoßende Wirkung auf diesen ausübt.

3. Vorrichtung (1) gemäß einem der vorausgehenden Ansprüche, wobei der Abstapelbereich (C) eine erste und zumindest eine weitere jeweils bezogen auf die Schwerkraftrichtung unterhalb der Förderstrecke gelegene Abstapelposition (24) aufweist, wobei jede Abstapelposition (24) jeweils konfiguriert ist, ein Kartenmagazin (8; 8a, 8b) aufzunehmen; und
die Abstapeleinheit (2) eingerichtet ist, selektiv bestimmte der entlang der Fördereinrichtung geförderten kartenförmigen Datenträger (5; 5a, 5b) von dieser zu lösen, um sie unmittelbar in ein an der ersten oder an einer der weiteren Abstapelpositionen angeordnetes Kartenmagazin (8; 8a, 8b) zu überführen und darin zu stapeln.

4. Vorrichtung (1) gemäß Anspruch 3, wobei die Abstapeleinheit (2) eingerichtet ist, selektiv bestimmte der entlang der Fördereinrichtung geförderten kartenförmigen Datenträger (5; 5a, 5b) von dieser zu lösen, um sie gemäß einem vorbestimmten Verteilungsschema alternierend entweder in ein an der ersten Abstapelposition (24) oder in zumindest ein weiteres jeweils an einer der weiteren Abstapelpositionen angeordnetes Kartenmagazin (8; 8a, 8b) zu überführen und darin zu stapeln.

5. Vorrichtung (1) gemäß Anspruch 4, wobei das Verteilungsschema zumindest abschnittsweise vorsieht, dass zunächst ein erstes der an den verschiedenen Abstapelpositionen befindlichen Kartenmagazine (8; 8a) bis zu einem definierten Befüllungsgrad befüllt wird, bevor alternierend dazu ein weiteres der Kartenmagazine (8; 8b) an einer anderen der Abstapelpositionen (24) befüllt wird.

6. Vorrichtung (1) gemäß einem der vorausgehenden Ansprüche, wobei
A)
die Vorrichtung (1) des Weiteren aufweist:
eine Zuführeinrichtung (6) zum Zuführen der Datenträger (5) zur Fördereinrichtung (4); und
einen Übergabeabschnitt, der eingerichtet ist, die von der Zuführvorrichtung transportierten Datenträger (5) von dieser zu entnehmen und sie auf die Fördereinrichtung (4) so zu übertragen, dass die Datenträger (5) dabei in einem stromaufwärts von der Abstapeleinheit (2) gelegenen Bereich der Förderstrecke von der Zuführeinrichtung in die hängende Transportweise an der Fördereinrichtung (4) überführt werden;
und / oder
B)
die Fördereinrichtung (4) eingerichtet ist, die Datenträger (5) so zu fördern, dass diese dabei mittels Ansaugen in hängender Transportweise an der Fördereinrichtung (4) fixiert werden;
und / oder
C) die Vorrichtung (1) des Weiteren aufweist:
zumindest ein Entladungselement (7), das konfiguriert ist, die Datenträger (5) vor ihrem Lösen von der Fördereinrichtung (4) jedenfalls teilweise elektrisch zu entladen;
und / oder
D)
die Vorrichtung (1) des Weiteren eine Zentriereinrichtung (27) aufweist, die eingerichtet ist, die von der Abstapeleinheit (2) selektiv von der Fördereinrichtung (4) gelösten Datenträger (5) während ihrer Überführung zu einem an einer zugeordneten Abstapelposition (24) des Abstapelbereichs befindlichen Kartenmagazins (8; 8a, 8b) bezüglich einer Aufnahmeöffnung des Kartenmagazins (8; 8a, 8b) auszurichten.

7. Vorrichtung (1) gemäß einem der vorausgehenden Ansprüche, des Weiteren aufweisend:
eine Kartenmagazinzuführeinrichtung zum automatischen Zuführen von Kartenmagazinen (8; 8a, 8b) zu einer Abstapelposition (24) des Abstapelbereichs, wobei die Kartenmagazinzuführeinrichtung einen Transferbereich zum automatischen Transfer eines zugeführten Kartenmagazins (8; 8a, 8b) in eine zugeordnete Abstapelposition (24) des Abstapelbereichs (C) aufweist, wobei der Transferbereich zumindest eines der folgenden Elemente aufweist:
- eine erste Sensoranordnung (21), die konfiguriert ist, die Anwesenheit und/oder Abwesenheit eines Kartenmagazins (8; 8a, 8b) an zumindest einer Stelle der Kartenmagazinzuführeinrichtung (13; 13a, 13b) zu detektieren;
- ein erstes Stoppelement (18) zum Blockieren einer Zuführung eines oder mehrerer weiterer Kartenmagazine (8; 8a, 8b), wenn der Transferbereich noch von einem vorausgegangenen Kartenmagazin (8; 8a, 8b) belegt ist;
- ein erstes Mitnehmerelement (19), das konfiguriert ist, ein in den Transferbereich überführtes Kartenmagazin (8; 8a, 8b) vor dessen Weiterleitung zu der Abstapelposition (24) temporär anzuhalten und erst zur Weiterleitung freizugeben, wenn eine automatisierte Prüfung ergibt, dass ein oder mehrere vorbestimmte Prüfkriterien zur Überprüfung, ob die Abstapelposition (24) zur Aufnahme eines Kartenmagazins (8; 8a, 8b) bereit ist, erfüllt sind;
- ein erstes Transferelement (20), das konfiguriert ist, ein im Transferbereich befindliches Kartenmagazin (8; 8a, 8b) unter Krafteinwirkung auf dieses weiter an die Abstapelposition (24) im Abstapelbereich automatisch zu transportieren.

8. Vorrichtung (1) gemäß Anspruch 7, wobei das bzw. die vorbestimmten Prüfkriterien auf einem oder mehreren der folgenden Kriterien oder einer Kombination daraus beruhen, das bzw. die erfüllt sein müssen, damit bei der Prüfung festgestellt wird, dass die Abstapelposition (24) zur Aufnahme eines Kartenmagazins (8; 8a, 8b) bereit ist:
- Es befindet sich kein Kartenmagazin (8; 8a, 8b) an der Abstapelposition (24);
- falls ein Stoppelement (18) vorgesehen ist, dieses aktiviert ist, so dass eine Zuführung eines oder mehrerer weiterer Kartenmagazine (8; 8a, 8b) in den Transferbereich blockiert ist;
- falls ein Transferelement (20) vorgesehen ist, dieses sich in einer Stellung befindet, von der aus es das sich im Transferbereich befindliche Kartenmagazin (8; 8a, 8b) zu der Abstapelposition (24) transportieren kann;
- falls ein Mitnehmerelement (19) vorgesehen ist, der Transportweg des Kartenmagazins vom Transferbereich zu der Abstapelposition (24) nur noch durch das Mitnehmerelement (19) und gegebenenfalls ein oder mehrere in Abhängigkeit davon bewegliche weitere Elemente blockiert ist, so dass der Transportweg nach einer nachfolgenden Bewegung des Mitnehmerelements (19) in eine nicht mehr blockierende Stellung frei wird.

9. Vorrichtung (1) gemäß einem der vorausgehenden Ansprüche, des Weiteren aufweisend eine Hubeinrichtung (14; 14a, 14b), die eingerichtet und angeordnet ist:
ein Kartenmagazin (8; 8a, 8b) zur Aufnahme von Datenträgern (5), die mittels der Abstapeleinheit (2) zur Überführung in das Kartenmagazin (8; 8a, 8b) gelöst werden, an einer der Hubeinrichtung (14; 14a, 14b) zugeordneten Abstapelposition (24) des Abstapelbereichs (C) zu positionieren und zu stützen; und
das Kartenmagazin (8; 8a, 8b) selbst oder ein bewegliches Stapelträgerelement (8s) des Kartenmagazins (8; 8a, 8b) in Abhängigkeit vom Befüllungsgrad des Kartenmagazins (8; 8a, 8b) entlang einer Verfahrrichtung so zu verfahren, dass das Lageniveau, bei dem ein jeweils neu dazukommender der Datenträger (5) bei dessen Abstapeln in dem Kartenmagazin (8; 8a, 8b) zu liegen kommt, für aufeinanderfolgende Datenträger (5) zumindest im Wesentlichen, konstant gehalten wird.

10. Vorrichtung (1) gemäß einem der vorausgehenden Ansprüche, wobei
A)
die Vorrichtung (1) des Weiteren eine Ausrichteeinrichtung (9a, 9b) aufweist, die eingerichtet ist, auf in einem Kartenmagazin (8; 8a, 8b) bereits abgestapelte Datenträger (5) unmittelbar oder mittelbar über das Kartenmagazin (8; 8a, 8b) so einzuwirken, dass diese dabei einheitlich innerhalb des Kartenmagazins (8; 8a, 8b) in eine vorbestimmte Lage ausgerichtet werden;
und / oder
B)
die Vorrichtung (1) des Weiteren aufweist:
eine Kartenmagazinausgabeeinrichtung (15; 15a, 15b), die eingerichtet ist, ein mit Datenträgern (5) befülltes Kartenmagazin (8; 8a, 8b) aus dem Abstapelbereich (C) automatisch zu übernehmen und einer Ausgabeposition (34) an der Kartenmagazinausgabeeinrichtung (15; 15a, 15b) automatisch zuzuführen;
wobei die Kartenmagazinausgabeeinrichtung (15; 15a, 15b) einen Pufferbereich zur temporären Aufnahme eines von einer Abstapelposition (24) des Abstapelbereichs entnommenen Kartenmagazins (8; 8a, 8b) aufweist, und der Pufferbereich zumindest eines der folgenden Elemente aufweist:
- eine zweite Sensoranordnung (32), die konfiguriert ist, die Anwesenheit und/oder Abwesenheit eines Kartenmagazins (8; 8a, 8b) an zumindest einer stromabwärts des Pufferbereichs gelegenen Stelle, insbesondere an der Ausgabeposition (34), der Kartenmagazinausgabeeinrichtung (15; 15a, 15b) zu detektieren;
- ein zweites Stoppelement (33), das konfiguriert ist, einen stromabwärts zur Ausgabeposition (34) hin verlaufenden weiteren Transportweg eines in dem Pufferbereich befindlichen Kartenmagazins (8; 8a, 8b) zu blockieren, wenn festgestellt wird, dass ein stromabwärts des Pufferbereichs gelegener Abschnitt der Kartenmagazinausgabeeinrichtung (15; 15a, 15b) noch von einem vorausgegangenen Kartenmagazin (8; 8a, 8b) belegt ist, und andernfalls den Transportweg freizugeben;
- ein zweites Transferelement, das konfiguriert ist, ein an einer Abstapelposition (24) des Abstapelbereich befindliches Kartenmagazin (8; 8a, 8b) nach dessen Befüllung mit Datenträgern (5) unter Krafteinwirkung auf dieses in den Pufferbereich automatisch zu transportieren;
und / oder
C)
die Vorrichtung (1) des Weiteren eine Zähleinrichtung aufweist, die konfiguriert ist, die in ein an einer Abstapelposition (24) des Abstapelbereichs befindliches Kartenmagazin (8; 8a, 8b) überführten Datenträger (5) zu zählen und ein entsprechendes Befüllungssignal zumindest dann auszugeben, wenn gemäß dem Zählerstand das Kartenmagazin (8; 8a, 8b) einen vorbestimmten Befüllungsgrad erreicht hat.

11. Vorrichtung (1) gemäß einem der vorausgehenden Ansprüche, des Weiteren aufweisend eine stromaufwärts der Abstapeleinheit (2) angeordnete Inspektionseinrichtung (3);
wobei die Inspektionseinrichtung (3) eingerichtet ist, die der Abstapeleinheit (2) mittels der Fördereinrichtung (4) zuzuführenden kartenförmigen Datenträger (5) jeweils einer Inspektionsprüfung zu unterziehen; und
die Abstapeleinheit (2) konfiguriert ist, das selektive Lösen von Datenträgern (5) von der Fördereinrichtung (4) in Abhängigkeit von den Ergebnissen der von der Inspektionseinrichtung (3) zuvor durchgeführten Inspektionsprüfungen zu bewirken, so dass eine von diesen Ergebnissen abhängige Sortierung der Datenträger (5) erreicht wird.

12. Vorrichtung (1) gemäß Anspruch 11, des Weiteren aufweisend einen ebenfalls bezogen auf die Schwerkraftrichtung unterhalb der Förderstrecke angeordneten und von dem Abstapelbereich (C) verschiedenen Aussortierbereich (D); wobei die Abstapeleinheit (2) des Weiteren eingerichtet ist, selektiv in Abhängigkeit von den Ergebnissen der von der Inspektionseinrichtung (3) zuvor durchgeführten Inspektionsprüfungen bestimmte der entlang der Fördereinrichtung (4) geförderten kartenförmigen Datenträger (5) von dieser zu lösen, um sie in den Aussortierbereich (D) zu überführen.

13. Verfahren zum Abstapeln von kartenförmigen Datenträgern (5) mit den folgenden Schritten:
Transport von vereinzelten kartenförmigen Datenträgern (5) mittels einer Fördereinrichtung (4) stromabwärts entlang einer Förderstrecke; und
Selektives Übertragen und Abstapeln von entlang der Förderstrecke geförderten kartenförmigen Datenträgern (5);
wobei die kartenförmigen Datenträger (5) so an der Fördereinrichtung (4) gefördert werden, dass sie dabei in hängender Transportweise an der Fördereinrichtung (4) fixiert sind; und
wobei beim selektiven Übertragen und Abstapeln der Datenträger (5) bestimmte der entlang der Fördereinrichtung (4) geförderten kartenförmigen Datenträger (5) von dieser gelöst werden, um sie unmittelbar in ein Kartenmagazin (8; 8a, 8b) zu überführen und darin zu stapeln, wenn dieses an einer bezogen auf die Schwerkraftrichtung unterhalb der Förderstrecke gelegenen Abstapelposition (24) angeordnet ist,
**dadurch gekennzeichnet, dass** zum selektiven Lösen eines bestimmten entlang der Fördereinrichtung (4) geförderten Datenträgers (5), auf diesen ein mechanischer Impuls mittels Abblasen des Datenträgers (5) von der Fördereinrichtung (4) übertragen wird, der in Richtung des Kartenmagazins gerichtet ist, in welches der bestimmte Datenträger zu überführen ist.

14. Verfahren gemäß Anspruch 13, wobei beim Abblasen ein gegen den zunächst an der Fördereinrichtung (4) hängenden Datenträger (5) gerichteter Luftstrom erzeugt wird, der eine den Datenträger (5) von der Fördereinrichtung (4) abstoßende Wirkung auf diesen ausübt.

15. Verwendung einer Vorrichtung (1) gemäß einem der Ansprüche 1 bis 12 zur Ausführung des Verfahrens gemäß einem der Ansprüche 13 bis 14.

## Claims

1. A device (1) for stacking card-like data carriers (5), comprising:
a conveying device (4) for transporting individual card-like data carriers (5) downstream along a conveying path;
a stacking unit (2) for selectively transferring and stacking card-like data carriers (5) conveyed along the conveying path;
wherein the conveying device (4) is arranged to convey the card-like data carriers (5) in such a way that they are fixed to it in a hanging mode of transport;
the stacking unit (2) is arranged to selectively release certain ones of the card-like data carriers (5) conveyed along the conveying device (4) from the latter in order to transfer them directly into a card magazine (8; 8a, 8b) and to stack them therein when the card magazine (8; 8a, 8b) is arranged in a stacking area (C) at a stacking position (24) which, in relation to the direction of gravity, is situated below the conveying path,
**characterised in that**,
in order to selectively release a particular data carrier (5) which is conveyed along the conveying device (4), the stacking unit (2) is further arranged to transmit a mechanical impulse to the data carrier (5) by blowing the data carrier (5) away from the conveying device (4), which mechanical impulse is oriented in the direction of the card magazine into which the particular data carrier is to be transferred.

2. The device (1) in accordance with claim 1, wherein the stacking unit (2) is arranged in such a way that, when the data carrier (5) is being blown away from the conveying device (4), an air stream is generated which is directed against the data carrier (5) initially suspended from the conveying device (4), which air stream exerts an effect on the data carrier (5) which repels it from the conveying device (4).

3. The device (1) in accordance with any one of the preceding claims, wherein the stacking area (C) comprises a first stacking position (24) and at least one further stacking position (24), each of which is located - in relation to the direction of gravity - below the conveying path, wherein each stacking position (24) is configured to receive a card magazine (8; 8a, 8b); and
wherein the stacking unit (2) is arranged to selectively release, from the conveying device (4), certain card-like data carriers (5; 5a, 5b) which are conveyed along the conveying device, in order to transfer them directly into, and stack them in, a card magazine (8; 8a, 8b) which is located at the first stacking position or at one of the other stacking positions.

4. The device (1) in accordance with claim 3, wherein the stacking unit (2) is arranged to selectively release, from the conveying device, certain ones of the card-like data carriers (5; 5a, 5b) which are conveyed along the conveying device, in order to transfer them, in an alternating manner, in accordance with a predetermined distribution scheme, either into a card magazine (8; 8a, 8b) which is arranged at the first stacking position (24) or into at least one further card magazine (8; 8a, 8b) which is respectively arranged at one of the further stacking positions, and to stack them therein.

5. The device (1) in accordance with claim 4, wherein the distribution scheme provides - at least in sections - that, initially, a first one of the card magazines (8; 8a) which is located at the various stacking positions is filled to a defined degree of filling before a further one of the card magazines (8; 8b) is filled, in an alternating manner with respect thereto, at a different one of the stacking positions (24).

6. The device (1) in accordance with any one of the preceding claims, wherein
A)
the device (1) further comprises:
a feeding device (6) for feeding the data carriers (5) to the conveying device (4); and
a transfer section which is arranged to remove the data carriers (5) transported by the feeding device from the latter and to transfer them to the conveying device (4) in such a way that, in the course of this, the data carriers (5) are transferred from the feeding device to the hanging mode of transport on the conveying device (4) in an area of the conveying path which is located upstream of the stacking unit (2);
and / or
B)
the conveying device (4) is arranged to convey the data carriers (5) in such a way that, in the course of this, they are fixed to the conveying device (4) in the hanging mode of transport by suction;
and / or
C)
the device (1) further comprises:
at least one discharge element (7) which is configured to at least partially discharge the data carriers (5) electrically before their release from the conveying device (4);
and / or
D)
the device (1) further comprises a centering device (27) which is arranged to align, with respect to a receiving opening of the card magazine (8; 8a, 8b), the data carriers (5) selectively released from the conveying device (4) by the stacking unit (2), during their transfer to a card magazine (8; 8a, 8b) which is located at an associated stacking position (24) of the stacking area.

7. The device (1) in accordance with any one of the preceding claims, further comprising:
a card magazine feeding device for automatically feeding card magazines (8; 8a, 8b) to a stacking position (24) of the stacking area, wherein the card magazine feeding device comprises a transfer area for automatically transferring a card magazine (8; 8a, 8b) fed to it to an associated stacking position (24) of the stacking area (C), wherein the transfer area comprises at least one of the following elements:
- a first sensor arrangement (21) which is configured to detect the presence and / or absence of a card magazine (8; 8a, 8b) at at least one location of the card magazine feeding device (13; 13a, 13b);
- a first stop member (18) for blocking a feeding of one or more further card magazines (8; 8a, 8b) when the transfer area is still occupied by a preceding card magazine (8; 8a, 8b);
- a first driver member (19) which is configured to temporarily stop a card magazine (8; 8a, 8b) transferred into the transfer area, prior to its transfer to the stacking position (24) and to release it for onward transfer only when an automated check reveals that one or more predetermined checking criteria for checking whether the stacking position (24) is ready to receive a card magazine (8; 8a, 8b) are satisfied;
- a first transfer member (20) which is configured to automatically transport a card magazine (8; 8a, 8b) which is located in the transfer area further to the stacking position (24) in the stacking area under the application of force thereto.

8. The device (1) in accordance with claim 7, wherein the predetermined test criterion or predetermined test criteria is / are based on one or more of the following criteria or a combination thereof, which must be satisfied so that during the test it can be determined that the stacking position (24) is ready to receive a card magazine (8; 8a, 8b):
- there is no card magazine (8; 8a, 8b) at the stacking position (24);
- if a stop member (18) is provided, this is activated so that a feeding of one or more further card magazines (8; 8a, 8b) into the transfer area is blocked;
- if a transfer member (20) is provided, this is in a position from which it can transport the card magazine (8; 8a, 8b) located in the transfer area to the stacking position (24);
- if a driver member (19) is provided, the transport path of the card magazine from the transfer area to the stacking position (24) is blocked only by the driver member (19) and, if applicable, one or more further members movable in dependence thereon, so that the transport path becomes free after a subsequent movement of the driver member (19) into a position where it is no longer blocking.

9. The device (1) in accordance with any one of the preceding claims, further comprising a lifting device (14; 14a, 14b) which is set up and arranged:
to position and to support, at a stacking position (24) of the stacking area (C) associated with the lifting device (14; 14a, 14b), a card magazine (8; 8a, 8b) for receiving data carriers (5) released by means of the stacking unit (2) for transfer into the card magazine (8; 8a, 8b); and
to move the card magazine (8; 8a, 8b) itself or a movable stack carrier element (8s) of the card magazine (8; 8a, 8b) along a displacement direction as a function of the degree of filling of the card magazine (8; 8a, 8b), in such a way that the positioning level, at which a respective new one of the data carriers (5) comes to lie in the card magazine (8; 8a, 8b) during its stacking process, is kept at least substantially constant for successive data carriers (5).

10. The device (1) in accordance with any one of the preceding claims, wherein
A)
the device (1) further comprises an alignment device (9a, 9b) which is arranged to act directly, or indirectly via the card magazine (8; 8a, 8b), on data carriers (5) already stacked in a card magazine (8; 8a, 8b) in such a way that, in the course of this, these are uniformly aligned in a predetermined position within the card magazine (8; 8a, 8b); and / or
B)
the device (1) further comprises:
a card magazine output device (15; 15a, 15b) which is arranged to automatically accept a card magazine (8; 8a, 8b) filled with data carriers (5) from the stacking area (C) and to automatically feed it to an output position (34) at the card magazine output device (15; 15a, 15b);
wherein the card magazine output device (15; 15a, 15b) has a buffer area for temporarily receiving a card magazine (8; 8a, 8b) taken from a stacking position (24) of the stacking area, and the buffer area comprises at least one of the following elements:
- a second sensor arrangement (32) which is configured to detect the presence and / or the absence of a card magazine (8; 8a, 8b) at at least one location located downstream of the buffer area, in particular at the output position (34) of the card magazine output device (15; 15a, 15b);
- a second stop member (33) which is configured to block a further transport path of a card magazine (8; 8a, 8b) located in the buffer area, which further transport path proceeds downstream towards the output position (34), when it is determined that a portion of the card magazine output device (15; 15a, 15b) which is located downstream of the buffer area is still occupied by a preceding card magazine (8; 8a, 8b), and otherwise to release the transport path;
- a second transfer member which is configured to automatically transport a card magazine (8; 8a, 8b) which is located at a stacking position (24) of the stacking area, under the action of force on the card magazine (8; 8a, 8b), into the buffer area after the card magazine (8; 8a, 8b) has been filled with data carriers (5);
and / or
C)
the device (1) further comprising a counting device which is configured to count the data carriers (5) which are transferred into a card magazine (8; 8a, 8b) which is located at a stacking position (24) of the stacking area, and to output a corresponding filling signal, at least when, according to the count, the card magazine (8; 8a, 8b) has reached a predetermined degree of filling.

11. The device (1) in accordance with any one of the preceding claims, further comprising an inspection device (3) which is arranged upstream of the stacking unit (2);
wherein the inspection device (3) is set up to subject each of the card-like data carriers (5) to be fed to the stacking unit (2) by means of the conveying device (4) to an inspection; and
wherein the stacking unit (2) is configured to effect the selective release of data carriers (5) from the conveying device (4) as a function of the results of the inspections which have previously been carried out by the inspection device (3), so that a sorting of the data carriers (5) in dependence on these results is achieved.

12. The device (1) in accordance with claim 11, further comprising an elimination area (D) which is also located below the conveying path in relation to the direction of gravity and which is different from the stacking area (C);
wherein the stacking unit (2) is further set up, as a function of the results of the inspections which have previously been carried out by the inspection device (3), to selectively release, from the conveying device (4), certain ones of the card-like data carriers (5) conveyed along the conveying device (4), in order to transfer them to the elimination area (D).

13. A method of stacking card-like data carriers (5) comprising the following steps:
transporting individual card-like data carriers (5) by means of a conveying device (4) downstream along a conveying path; and
selectively transferring and stacking card-like data carriers (5) conveyed along the conveying path;
wherein the card-like data carriers (5) are conveyed at the conveying device (4) in such a way that they are fixed to the conveying device (4) in a hanging mode of transport; and
wherein, during the selective transfer and the stacking of the data carriers (5), certain ones of the card-like data carriers (5) conveyed along the conveying device (4) are released from the conveying device (4) in order to transfer them directly into a card magazine (8; 8a, 8b) and to stack them therein when the card magazine (8; 8a, 8b) is arranged at a stacking position (24) which, in relation to the direction of gravity, is situated below the conveying path;
**characterised in that**,
in order to selectively release a particular data carrier (5) which is conveyed along the conveying device (4), a mechanical impulse is transmitted onto the data carrier (5) by blowing the data carrier (5) away from the conveying device (4), which mechanical impulse is oriented in the direction of the card magazine into which the particular data carrier is to be transferred.

14. The method in accordance with claim 13, wherein, when the data carrier (5) is being blown away from the conveying device (4), an air stream is generated which is directed against the data carrier (5) initially suspended from the conveying device (4), which air stream exerts an effect on the data carrier (5) which repels it from the conveying device (4).

15. Use of a device (1) in accordance with any one of the claims 1 to 12 for carrying out the method in accordance with any one of the claims 13 to 14.

## Revendications

1. Dispositif (1) pour l'empilage de supports de données (5) en forme de cartes, présentant :
un système de convoyage (4) pour le transport de supports de données (5) en forme de cartes séparés en aval le long d'une voie de convoyage ;
une unité d'empilage (2) pour la transmission et l'empilage sélectifs de supports de données (5) en forme de cartes convoyés le long de la voie de convoyage ;
dans lequel le système de convoyage (4) est mis au point pour convoyer les supports de données (5) en forme de cartes de telle sorte que ceux-ci y sont fixés ce faisant selon un mode de transport suspendu ;
l'unité d'empilage (2) est mise au point pour détacher de manière sélective certains supports de données (5) en forme de cartes convoyés le long du système de convoyage (4) de celui-ci pour les transférer directement dans une cassette chargeur de cartes (8 ; 8a, 8b) et les y empiler lorsque celle-ci est disposée sur une position d'empilage (24) située en dessous de la voie de convoyage par rapport à la direction de pesanteur dans une zone d'empilage (C), **caractérisé en ce que**
l'unité d'empilage (2) est mise en outre au point pour transmettre, afin de détacher de manière sélective un support de données (5) donné convoyé le long du système de convoyage (4), sur celui-ci une impulsion mécanique au moyen d'un retrait par air soufflé du support de données (5) du système de convoyage (4), laquelle est dirigée en direction de la cassette chargeur de cartes, dans laquelle le support de données donné est à transférer.

2. Dispositif (1) selon la revendication 1, dans lequel l'unité d'empilage (2) est mise au point de telle sorte qu'est généré, lors du retrait par air soufflé, un flux d'air dirigé à l'encontre du support de données (5) d'abord suspendu sur le système de convoyage (4), qui exerce sur le support de données (5) une action l'éjectant du système de convoyage (4).

3. Dispositif (1) selon l'une quelconque des revendications précédentes, dans lequel la zone d'empilage (C) présente une première et au moins une autre position d'empilage (24) placée respectivement en dessous de la voie de convoyage par rapport à la direction de pesanteur, dans lequel chaque position d'empilage (24) est configurée respectivement pour recevoir une cassette chargeur de cartes (8 ; 8a, 8b) ; et
l'unité d'empilage (2) est mise au point pour détacher de manière sélective certains supports de données (5 ; 5a, 5b) en forme de cartes convoyés le long du système de convoyage de celui-ci pour les transférer directement dans une cassette chargeur de cartes (8 ; 8a, 8b) disposée sur la première ou une des autres positions d'empilage et les y empiler.

4. Dispositif (1) selon la revendication 3, dans lequel l'unité d'empilage (2) est mise au point pour détacher de manière sélective certains supports de données (5 ; 5a, 5b) en forme de cartes convoyés le long du système de convoyage de celui-ci pour les transmettre, selon un schéma de répartition prédéfini, en alternance soit dans une cassette chargeur de cartes (8 ; 8a, 8b) disposée sur la première position d'empilage (24) soit dans au moins une autre cassette chargeur de cartes disposée respectivement sur une des autres positions d'empilage et les y empiler.

5. Dispositif (1) selon la revendication 4, dans lequel le schéma de répartition prévoit au moins par endroits que d'abord une première cassette chargeur de cartes (8 ; 8a) se trouvant sur les différentes positions d'empilage est remplie jusqu'à un degré de remplissage défini avant de remplir, en alternance avec celle-ci, une autre des cassettes chargeurs de cartes (8 ; 8b) sur une autre des positions d'empilage (24).

6. Dispositif (1) selon l'une quelconque des revendications précédentes, dans lequel
A)
le dispositif (1) présente par ailleurs :
un système d'amenée (6) pour amener les supports de données (5) vers le système de convoyage (4) ; et
une section de livraison, qui est mise au point pour prélever du dispositif d'amenée les supports de données (5) transportés par celui-ci et les transmettre sur le système de convoyage (4) de telle sorte que les supports de données (5) sont transférés ce faisant depuis le système d'amenée, selon un mode de transport suspendu, au système de convoyage (4) dans une zone, située en aval de l'unité d'empilage (2), de la voie de convoyage ;
et/ou
B)
le système de convoyage (4) est mis au point pour convoyer les supports de données (5) de manière à les fixer ce faisant sur le système de convoyage (4) au moyen d'une aspiration dans un mode de transport suspendu ;
et/ou
C) le dispositif (1) présente par ailleurs :
au moins un élément de déchargement (7), qui est configuré pour décharger dans tous les cas en partie de manière électrique les supports de données (5) avant leur détachement du système de convoyage (4) ;
et/ou
D)
le dispositif (1) présente par ailleurs un système de centrage (27), qui est mis au point pour orienter les supports de données (5) détachées de manière sélective du système de convoyage (4) par l'unité d'empilage (2) pendant leur transfert à une cassette chargeur de cartes (8 ; 8a, 8b) se trouvant sur une position d'empilage (24) associée de la zone d'empilage par rapport à une ouverture de réception de la cassette chargeur de cartes (8 ; 8a, 8b).

7. Dispositif (1) selon l'une quelconque des revendications précédentes, présentant par ailleurs :
un système d'amenée de cassettes chargeurs de cartes pour amener automatiquement des cassettes chargeurs de cartes (8 ; 8a, 8b) vers une position d'empilage (24) de la zone d'empilage, dans lequel le système d'amenée de cassettes chargeurs de cartes présente une zone de transfert pour le transfert automatique d'une cassette chargeur de cartes (8 ; 8a, 8b) amenée dans une position d'empilage (24) associée de la zone d'empilage (C), dans lequel la zone de transfert présente au moins un des éléments suivants :
- un premier ensemble capteur (21), qui est configuré pour détecter la présence et/ou l'absence d'une cassette chargeur de cartes (8 ; 8a, 8b) sur au moins un emplacement du système d'amenée de cassettes chargeurs de cartes (13 ; 13a, 13b) ;
- un premier élément d'arrêt (18) pour bloquer une amenée d'une ou de plusieurs autres cassettes chargeurs de cartes (8 ; 8a, 8b) lorsque la zone de transfert est encore occupée par une cassette chargeur de cartes (8 ; 8a, 8b) précédente ;
- un premier élément d'entraînement (19), qui est configuré pour arrêter temporairement une cassette chargeur de cartes (8 ; 8a, 8b) transférée dans la zone de transfert avant son acheminement ultérieur vers la position d'empilage (24) et la débloquer pour l'acheminement ultérieur lorsqu'un contrôle automatisé donne qu'un ou plusieurs critères de contrôle prédéfinis pour vérifier si la position d'empilage (24) est prête à recevoir une cassette chargeur de cartes (8 ; 8a, 8b) sont remplis ;
- un premier élément de transfert (20), qui est configuré pour transporter de manière automatique une cassette chargeur de cartes (8 ; 8a, 8b) se trouvant dans la zone de transfert sous l'effet d'une force exercée sur celle-ci ultérieurement à la position d'empilage (24) dans la zone d'empilage.

8. Dispositif (1) selon la revendication 7, dans lequel le ou les critères de contrôle prédéfinis reposent sur un ou plusieurs des critères suivants ou sur une combinaison de ceux-ci, qui doivent être obligatoirement remplis afin de constater lors du contrôle que la position d'empilage (24) est prête à recevoir une cassette chargeur de cartes (8 ; 8a, 8b) :
- aucune cassette chargeur de cartes (8 ; 8a, 8b) ne se trouve sur la position d'empilage (24) ;
- si un élément d'arrêt (18) est prévu, celui-ci est activé de sorte qu'une amenée d'une ou de plusieurs autres cassettes chargeurs de cartes (8 ; 8a, 8b) dans la zone de transfert est bloquée ;
- si un élément de transfert (20) est prévu, celui-ci se trouve dans une position, depuis laquelle il peut transporter la cassette chargeur de cartes (8 ; 8a, 8b) se trouvant dans la zone de transfert vers la position d'empilage (24) ;
- si un élément d'entraînement (19) est prévu, le trajet de transport de la cassette chargeur de cartes depuis la zone de transfert vers la position d'empilage (24) est bloqué seulement encore par l'élément d'entraînement (19) et éventuellement par un ou plusieurs autres éléments mobiles indépendamment de celui-ci de sorte que le trajet de transport est libre après un déplacement qui suit de l'élément d'entraînement (19) dans une position ne bloquant plus.

9. Dispositif (1) selon l'une quelconque des revendications précédentes, présentant par ailleurs un système de levage (14 ; 14a, 14b), qui est mis au point et est disposé :
pour positionner et soutenir une cassette chargeur de cartes (8 ; 8a, 8b) pour recevoir des supports de données (5), qui sont détachés au moyen de l'unité d'empilage (2) pour le transfert dans la cassette chargeur de cartes (8 ; 8a, 8b), sur une position d'empilage (24), associée au système de levage (14 ; 14a, 14b), de la zone d'empilage (C) ; et
pour déplacer la cassette chargeur de cartes (8 ; 8a, 8b) elle-même ou un élément de support de pile mobile (8s) de la cassette chargeur de cartes (8 ; 8a, 8b) en fonction du degré de remplissage de la cassette chargeur de cartes (8 ; 8a, 8b) le long d'une direction de déplacement de telle sorte que le niveau de position, auquel un nouveau support de données respectif venant s'ajouter des supports de données (5) vient se placer lors de son empilage dans la cassette chargeur de cartes (8 ; 8a, 8b) est maintenu au moins sensiblement de manière constante pour des supports de données (5) qui suivent.

10. Dispositif (1) selon l'une quelconque des revendications précédentes, dans lequel
A)
le dispositif (1) présente par ailleurs un système d'orientation (9a, 9b), qui est mis au point pour agir directement ou indirectement par l'intermédiaire de la cassette chargeur de cartes (8 ; 8a, 8b) sur des supports de données (5) déjà empilés dans une cassette chargeur de cartes (8 ; 8a, 8b) de telle sorte que ceux-ci sont orientés ce faisant de manière uniforme à l'intérieur de la cassette chargeur de cartes (8 ; 8a, 8b) dans une position prédéfinie ;
et/ou
B)
le dispositif (1) présente par ailleurs :
un système de distribution de cassette chargeur de cartes (15 ; 15a, 15b), qui est mis au point pour réceptionner de manière automatique une cassette chargeur de cartes (8 ; 8a, 8b) remplie de supports de données (5) provenant de la zone d'empilage (C) et pour les amener automatiquement à une position de distribution (34) sur le système de distribution de cassette de chargeur de cartes (15 ; 15a, 15b) ;
dans lequel le système de distribution de cassette chargeur de cartes (15 ; 15a, 15b) présente une zone tampon pour recevoir temporairement une cassette chargeur de cartes (8 ; 8a, 8b) prélevée d'une position d'empilage (24) de la zone d'empilage, et la zone tampon présente au moins un des éléments suivants :
- un deuxième ensemble capteur (32), qui est configuré pour détecter la présence et/ou l'absence d'une cassette chargeur de cartes (8 ; 8a, 8b) sur au moins un emplacement situé en aval de la zone tampon, en particulier sur une position de distribution (34), du système de distribution de cassette chargeur de cartes (15 ; 15a, 15b) ;
- un deuxième élément d'arrêt (33), qui est configuré pour bloquer un autre trajet de transport s'étendant en aval en direction de la position de distribution (34), d'une cassette chargeur de cartes (8 ; 8a, 8b) se trouvant dans la zone tampon lorsqu'il est constaté qu'une section, située en aval de la zone tampon, du système de distribution de cassette chargeur de cartes (15 ; 15a, 15b) est occupée encore par une cassette chargeur de cartes (8 ; 8a, 8b) précédente, et pour débloquer dans le cas contraire la voie de transport ;
- un deuxième élément de transfert, qui est configuré pour transporter automatiquement une cassette chargeur de cartes (8 ; 8a, 8b) se trouvant sur une position d'empilage (24) de la zone d'empilage après son remplissage avec des supports de données (5) sous l'effet d'une force exercée sur celle-ci dans la zone tampon ;
et/ou
C)
le dispositif (1) présente par ailleurs un système de comptage, qui est configuré pour compter les supports de données (5) transférés dans une cassette chargeur de données (8 ; 8a, 8b) se trouvant sur une position d'empilage (24) de la zone d'empilage et pour distribuer un signal de remplissage correspondant au moins lorsque selon l'état de remplissage, la cassette chargeur de cartes (8 ; 8a, 8b) a atteint un degré de remplissage prédéfini.

11. Dispositif (1) selon l'une quelconque des revendications précédentes, présentant par ailleurs un système d'inspection (3) disposé en aval de l'unité d'empilage (2) ;
dans lequel le système d'inspection (3) est mis au point pour soumettre les supports de données (5) en forme de cartes à amener à l'unité d'empilage (2) au moyen du système de convoyage (4) respectivement à un contrôle d'inspection ; et
l'unité d'empilage (2) est configurée pour entraîner le détachement sélectif de supports de données (5) du système de convoyage (4) en fonction des résultats des contrôles d'inspection effectués au préalable par le système d'inspection (3) de sorte qu'un tri des supports de données (5) en fonction desdits résultats est atteint.

12. Dispositif (1) selon la revendication 11, présentant par ailleurs une zone de tri (D) disposée également en dessous de la voie de convoyage par rapport à la direction de pesanteur et différente de la zone d'empilage (C) ; dans lequel l'unité d'empilage (2) est mise au point par ailleurs pour détacher de manière sélective, en fonction des résultats des contrôles d'inspection effectués au préalable par le système d'inspection (3), certains supports de données (5) en forme de cartes convoyés le long du système de convoyage (4) de celui-ci pour les transférer dans la zone de tri (D).

13. Procédé pour empiler des supports de données (5) en forme de cartes avec les étapes suivantes :
de transport de supports de données (5) en forme de cartes séparés au moyen d'un système de convoyage (4) en aval le long d'une voie de transport ; et
de transmission et d'empilage sélectifs de supports de données (5) en forme de cartes convoyés le long de la voie de convoyage ;
dans lequel les supports de données (5) en forme de cartes sont convoyés de telle sorte sur le système de convoyage (4) qu'ils sont fixés ce faisant sur le système de convoyage (4) selon un mode de transport suspendu ; et
dans lequel lors de la transmission et de l'empilage sélectifs des supports de données (5), certains supports de données (5) en forme de cartes convoyés le long du système de convoyage (4) sont détachés de celui-ci pour les transférer directement dans une cassette chargeur de cartes (8 ; 8a, 8b) et les y empiler lorsque celle-ci est disposée sur une position d'empilage (24) située en dessous de la voie de convoyage par rapport à la direction de pesanteur ;
**caractérisé en ce que**
une impulsion mécanique est transmise au moyen d'un retrait par air soufflé du support de données (5) du système de convoyage (4) pour détacher de manière sélective un support de données (5) donné convoyé le long du système de convoyage (4), laquelle est dirigée en direction de la cassette chargeur de cartes, dans laquelle le support de données donné est à transférer.

14. Procédé selon la revendication 13, dans lequel lors du retrait par air soufflé, un flux d'air dirigé à l'encontre du support de données (5) suspendu d'abord sur le système de convoyage (4) est généré, lequel exerce une action sur le support de données (5) l'éjectant du système de convoyage (4).

15. Utilisation d'un dispositif (1) selon l'une quelconque des revendications 1 à 12 pour exécuter le procédé selon l'une quelconque des revendications 13 à 14.
